# EUROPÄISCHE PATENTSCHRIFT

(11) **EP 4 012 396 B1**
(45) Veröffentlichungstag und Bekanntmachung des Hinweises auf die Patenterteilung: **04.11.2026**
(21) Anmeldenummer: 21197490.2
(22) Anmeldetag: 17.09.2021
(51) Int. Cl.: G01N 27/622

(54) **IONENMOBILITÄTSSPEKTROMETER UND VERFAHREN ZUM BETRIEB EINES IONENMOBILITÄTSSPEKTROMETERS**
ION MOBILITY SPECTROMETER AND METHOD FOR OPERATING SAME
SPECTROMÈTRE DE MOBILITÉ IONIQUE ET PROCÉDÉ DE FONCTIONNEMENT D'UN SPECTROMÈTRE DE MOBILITÉ IONIQUE

(30) Priorität: 09.12.2020 DE 102020132852
(43) Veröffentlichungstag der Anmeldung: 15.06.2022
(73) Patentinhaber: Bruker Optics GmbH & Co. KG, 76275 Ettlingen (DE)
(72) Erfinder: Renner, Uwe, 04105 Leipzig (DE); Heller, Wolfgang, 04319 Leipzig (DE); Beyer, Achim, 04821 Brandis (DE); Dobrianov, Stoyo, 04319 Leipzig (DE)
(74) Vertreter: Gulde & Partner

(56) Entgegenhaltungen:
- CN-A- 110 828 283
- US-A1- 2008 251 712
- US-A1- 2011 036 977
- HAUSCHILD ANNE-CHRISTIN ET AL: "Peak Detection Method Evaluation for Ion Mobility Spectrometry by Using Machine Learning Approaches", METABOLITES, vol. 3, no. 2, 16 April 2013 (2013-04-16), pages 277 - 293, XP055893031, DOI: 10.3390/metabo3020277
- GUHARAY S K ET AL: "Ion Mobility Spectrometry: Ion Source Development and Applications in Physical and Biological Sciences", IEEE TRANSACTIONS ON PLASMA SCIENCE, IEEE SERVICE CENTER, PISCATAWAY, NJ, US, vol. 36, no. 4, 1 August 2008 (2008-08-01), pages 1458 - 1470, XP011232850, ISSN: 0093-3813, DOI: 10.1109/TPS.2008.927290
- FERNANDEZ-MAESTRE ROBERTO ED - EYERS CLAIRE ET AL: "Accuracy of reduced mobilities and measurement of instrumental parameters in ion mobility spectrometry", INTERNATIONAL JOURNAL OF MASS SPECTROMETRY, vol. 421, 3 June 2017 (2017-06-03), pages 8 - 13, XP085238461, ISSN: 1387-3806, DOI: 10.1016/J.IJMS.2017.05.018
- VASILIEV VALERY: "Calibration Method for Ion Mobility Spectrometer", INTERNATIONAL CONFERENCE ON NANOTECHNOLOGIES AND BIOMEDICAL ENGINEERING, 25 October 2019 (2019-10-25), XP55916372, Retrieved from the Internet <URL:http://repository.utm.md/bitstream/handle/5014/5279/Conf_ICNBME_2011_p234_235.pdf?sequence=1&isAllowed=y>
- WARAKSA EMILIA ET AL: "Dopants and gas modifiers in ion mobility spectrometry", TRAC TRENDS IN ANALYTICAL CHEMISTRY, ELSEVIER, AMSTERDAM, NL, vol. 82, 11 June 2016 (2016-06-11), pages 237 - 249, XP029706319, ISSN: 0165-9936, DOI: 10.1016/J.TRAC.2016.06.009

## Beschreibung

Die vorliegende Erfindung betrifft ein lonenmobilitätsspektrometer, insbesondere ein mobiles lonenmobilitätsspektrometer mit verbesserter Probengaszuführung, sowie ein Verfahren zum Betrieb eines lonenmobilitätsspektrometers, insbesondere für dessen Kalibrierung zur referenzbasierten Messung der lonenmobilität einer Probe.

### TECHNISCHER HINTERGRUND

Ein lonenmobilitätsspektrometer ist ein Instrument zur Charakterisierung von Ionen anhand ihrer Mobilität in einem Driftmedium unter der Wirkung einer elektromagnetischen Kraft. Ein lonenmobilitätsspektrometer weist in der Regel eine Reaktionskammer sowie einen daran angrenzenden Driftraum auf. Dabei dient die Reaktionskammer der Ionisierung des Probenmaterials sowie der Bildung von Produktionen und der Driftraum dem Bestimmen von Flug- bzw. Driftzeit der gebildeten Ionen.

Die Probe gelangt über Einlässe und mittels eines Trägergases in den Reaktionsraum und wird dort durch Energiezufuhr ionisiert. Die gebildeten Ionen werden durch elektrische Feldeinwirkung in den Driftraum geleitet, der beispielsweise eintrittsseitig durch ein Gitter als lonenmodulator und gegenüberliegend durch eine Detektoreinheit zur Ionenstrommessung begrenzt ist. In dem Driftraum werden die Ionen durch weitere Feldeinwirkung in Richtung des Detektors bewegt. Ein im Driftraum enthaltenes Driftmedium mit definierten physikalisch-chemischen Eigenschaften wechselwirkt mit den Ionen und wirkt der durch die Feldeinwirkung vermittelten Bewegung der Ionen entgegen. Der Transport der Ionen im Driftraum hängt somit von der elektrischen Feldstärke als auch der Wechselwirkung mit dem Driftgas ab und ist durch die resultierende Driftgeschwindigkeit charakterisierbar.

Die lonenmobilität K ist somit ein Maß für die molekulare Reibung eines Ions in einem bestimmten Driftmedium unter der Wirkung einer elektromagnetischen Kraft und ist umso größer, je kleiner diese Reibung ist. Bestimmt wird die lonenmobilität K als Proportionalitätsfaktor zwischen der Driftgeschwindigkeit v und der in Driftrichtung wirksamen elektrischen Feldkomponente E. In erster Näherung gilt zwischen diesen Größen die lineare Beziehung $v = K * E .$ (1)

Sofern die Eigenschaften des Driftmediums im Driftraum homogen vorliegen und das elektrische Feld im Driftbereich der Ionen konstant ist, bestimmt sich die lonenmobilität auf einer vorgegebenen Wegstrecke L durch Bestimmung der Driftzeit t und der Spannungsdifferenz U zwischen Ende und Anfang der Driftstrecke anhand der aus (1) abgeleiteten Gleichung: $K = {L}^{2} / \left(U*t\right) .$ (2)

Die so ermittelte lonenmobilität K bezieht sich dabei stets auf ein konkretes Driftmedium und ist keine spezifische Konstante eines bestimmten Ions. Vielmehr hängt der Wert der lonenmobilität von der Wechselwirkung des Ions mit dem Driftmedium ab. Wird diese Wechselwirkung als Stoßprozess angenommen, hängt deren Stärke gemäß der kinetischen Gastheorie von der Masse der beteiligten Stoßpartner, Teilchenzahldichte, Druck und Temperatur des Driftmediums und dem Wirkungsquerschnitt des Ions mit den Molekülen des Driftgases ab.

Bei unter atmosphärischen Bedingungen eingesetzten lonenmobilitätsspektrometern erstreckt sich der Wertebereiche der Teilchenzahldichte des Driftgases, welche wiederum von dessen Temperatur T und dem Druck p abhängt, über einen großen Bereich. Beispielsweise ist für die (absolute) Temperatur T eine Spanne von -30°C bis +60°C und für den Druck ein Bereich von 50 kPa bis 110 kPa möglich. Die Abhängigkeit der lonenmobilität von der Teilchenzahldichte wird daher durch Umrechnung auf eine normierte lonenmobilität eliminiert. Selbst die normierte lonenmobilität K₀(T) ist jedoch aufgrund der Abhängigkeit vom temperaturabhängigen Wirkungsquerschnitt der jeweiligen Wechselwirkung temperaturabhängig.

Beim Bestimmen der lonenmobilität wird daher in der Regel vorausgesetzt, dass das Driftmedium homogene und konstante physikalisch-chemische Eigenschaften besitzt. Verwendet man jedoch beispielsweise Luft als Driftmedium, so kann bereits der darin vorhandene Anteil an Wasser den Wert der lonenmobilität signifikant beeinflussen. Daher sollte trockene Luft, vorzugsweise mit einer absoluten Wasserkonzentration kleiner 100 ppm als Driftmedium verwendet werden. Hierzu werden in der Regel Filtersysteme eingesetzt.

Damit das Driftmedium seine definierten physikalisch-chemischen Eigenschaften beibehält, wird es in dem Driftraum zudem stetig durch einen Gasfluss erneuert. Mit anderen Worten wird der Driftraum durch einen kontinuierlichen Driftgasfluss durchströmt, wobei der Gasfluss durch Integration der Gasflussdichte über die vom Gas durchströmte Querschnittsfläche bestimmt ist. Die Gasflussdichte ist dabei das Produkt aus Gaskonzentration und Gasgeschwindigkeit. Der Gasfluss im Driftraum ist dem Ionenfluss überlagert und kann die effektive Driftzeit prinzipiell beeinflussen. Die Driftgasgeschwindigkeit von beispielsweise 4 cm/s ist jedoch im Vergleich zur Driftgeschwindigkeit der Ionen von beispielsweise 4 m/s deutlich kleiner und daher für das Bestimmen der lonenmobilität oft vernachlässigbar.

Die Ionisierung der zu analysierenden Probe erfolgt in einem lonenmobilitätsspektrometer zunächst über die Zufuhr von Energie mittels einer Ionisierungsquelle. Dem Fachmann sind eine Vielzahl von Ionisierungsquellen bekannt, beispielsweise Plasmaquellen. Aus den mittels der Quelle gebildeten Primär-Ionen können durch komplexe Molekül-Ionen-Reaktionen und Ladungstransferprozesse mit der Probensubstanz weitere Produkt-Ionen entstehen. Aufgrund des mehrstufigen Charakters der Ionisierung findet diese im Reaktionsraum statt, der durch den Bereich zwischen Ionisierungsquelle und Ionenstrommodulator gebildet wird.

Eine effiziente Ionisierung an der Ionisierungsquelle ist Voraussetzung für nachfolgende lonisierungen sowie für einen effizienten Messbetrieb. Zwar steigt mit höheren Energien der lonisierungsquelle in der Regel die Menge erzeugter Primär-Ionen, nachteilig ist jedoch auch die Menge der gebildeten NOx -Verbindungen und des gebildeten Ozons. Dabei sind Ozon, Stickoxide und Stickoxidverbindungen (NOx-Verbindungen) für den Einsatz im lonenmobilitätsspektrometer nachteilig, da diese die Ionisierung bestimmter Probenmoleküle hemmen oder verhindern. Beispielsweise binden NOx-Verbindungen aufgrund ihrer hohen Elektronenaffinität negative Ladungen, welche damit für weitere Ionisierung der Primär-Ionen nicht zur Verfügung stehen und die vermehrte Bildung von Ozon führt zu ungewollten Nebenreaktionen und höherem Verschleiß der sich im Gaskreislauf befindlichen Komponenten wie Pumpen und Sensoren. Somit ist der zur Probenionisierung einsetzbare Energiebereich limitiert.

Es ist daher durch konstruktive Maßnahmen dafür Sorge zu tragen, dass das aus Probenmaterial und Trägergas bestehende Probengas effektiv in den Ionisierungsbereich nahe der lonisierungsquelle gelangt. Dabei ist jedoch zu beachten, dass bei zu geringen Eintrittsgeschwindigkeiten des Probengases gegebenenfalls nur ein geringer Anteil der Probe zur Ionisierungsquelle gelangt. Gleichzeitig können zu hohe Eintrittsgeschwindigkeiten des Probengases zu Verwirbelungen und komplexen Strömungspfaden führen. Eine zielgenaue Zuführung des Probenmaterials zur Ionisierungsquelle ist jedoch ebenfalls nachteilig, da bestimmte Produkt-Ionen, wie beispielsweise Dimere, eine größere Bildungszone erfordern in der primäre Monomer-Ionen auf weitere neutrale Probengasmoleküle treffen. Zudem ist ein solches "Zielen" auf die Quelle auch aufgrund von Toleranzen fehleranfällig.

Wie bereits einleitend beschrieben, lässt sich die lonenmobilität K in einem stofflich wohldefinierten Driftmedium durch Messung der Driftzeit und anhand der Gleichung (2) ermitteln. Aus der so ermittelten lonenmobilität K lässt sich ferner die temperaturabhängige normierte Ionenmobilität K₀(T) bestimmen. Nachteilig sind hierfür jedoch die Messungen einer Vielzahl von Werten, wie Druck, Temperatur, Driftspannung, Driftzeit notwendig, wobei sich die Messfehler der Einzelmessungen gegebenenfalls summieren. Es ist daher vorteilhaft, stattdessen ein referenzbasiertes Verfahren zum Bestimmen der lonenmobilität anzuwenden.

Dabei wird eine Referenzsubstanz verwendet, für welche eine normierte, temperaturabhängige lonenmobilität K₀^{R}(T) bekannt ist. Sofern die physikalisch-chemischen Bedingungen im Driftraum bei Referenz- und Probenmessung gleich sind, ist durch Vergleich der Driftzeiten der Referenzsubstanz und der Probensubstanz die lonenmobilität der Probensubstanz K₀^{P}(T) mit der Driftzeit t_{P} aus dem Driftzeitverhältnis t_{R} / t_{P} durch K₀^{P}(T) = t_{R} / t_{P} * K₀^{R}(T) berechenbar. Vorteilhaft sind bei diesem Verfahren lediglich der Messwertfehler der Driftzeitmessung (welcher bei ausreichend hoher Messwertabtastung im Bereich des Rauschens liegt) sowie der Messfehler der Driftraumtemperatur T (welcher nur bei einer stark von T abhängigen Ionenmobilität bedeutsam wird) relevant. Die Referenzsubstanz wird dabei in der Regel extern zugeführt, entweder über die Probenzuleitung oder über einen zusätzlichen Gaseinlass, der über ein Ventil zuschaltbar sein kann. Dies erfordert nachteilig eine konstruktiv aufwendigere Gestaltung des lonenmobilitätsspektrometers.

Die CN 110 828 283 A offenbart eine IMS Vorrichtung mit einem Driftraum und einem Reaktionsraum, wobei ein Probengas durch Anströmen einer heißen Oberfläche ionisiert wird, wobei ein Driftgas durch einen Driftgaseinlas und mit zu der Probengasströmung entgegengesetzten Strömungskomponenten eingeleitet wird und ein wobei Gasauslass benachbart zu dem Probengaseinlass und benachbart zu einem Schaltgitter angeordnet ist.

FERNANDEZ-MAESTRE ROBERTO ED - EYERS CLAIRE ET AL: "Accuracy of reduced mobilities and measurement of instrumental parameters in ion mobility spectrometry", INTERNATIONAL JOURNAL OF MASS SPECTROMETRY, Bd. 421, 3. Juni 2017 (2017-06-03), Seiten 8-13, XP085238461, ISSN: 1387-3806, DOI: 10.1016/J.IJMS.2017.05.018 offenbart ein Kalibrierverfahren für ein lonenmobilitätsspektrometer (Verhältnismethode).

VASILIEV VALERY: "Calibration Method for Ion Mobility Spectrometer", INTERNATIONAL CONFERENCE ON NANOTECHNOLOGIES AND BIOMEDICAL ENGINEERING, 25. Oktober 2019 (2019-10-25), XP55916372, offenbart dass sich Stickoxide prinzipiell zur Kalibrierung eines lonenmobilitätsspektrometers eignen, jedoch nicht wie sich Stickoxide nach einer solchen Kalibrierung beziehungsweise für einen Messbetrieb weitgehend vermeiden lassen.

GUHARAY S K ET AL: "Ion Mobility Spectrometry: Ion Source Development and Applications in Physical and Biological Sciences" offenbart ein IMS, bei dem die Ionisierung außerhalb des Geräts durch eine Electrospray-Ionisierungsquellequelle (ESI) erfolgt, wobei die erzeugten lonen anschließend in den Driftraum des IMS überführt werden.

US 2011/036977 A1 beschreibt ein IMS mit einer großvolumigen Ionisierungsquelle, die sich im Wesentlichen entlang des gesamten Reaktionsraums erstreckt.

Die Aufgabe der vorliegenden Erfindung ist es, die Nachteile des Standes der Technik zu überwinden oder zu minimieren und ein verbessertes lonenmobilitätsspektrometer sowie ein verbessertes Verfahren zum Betrieb eines lonenmobilitätsspektrometers bereitzustellen.

### BESCHREIBUNG DER ERFINDUNG

Ein erster Aspekt der vorliegenden Offenbarung betrifft ein lonenmobilitätsspektrometer (IMS) zum Ermitteln einer lonenmobilität, bevorzugt eines lonenmobilitätsspektrums, einer Probe, insbesondere einer in einem Probengas (bestehend aus Probe und einem Trägergas) befindlichen Probe. Das lonenmobilitätsspektrometer gemäß der vorliegenden Offenbarung weist dabei einen zum Transport von Ionen von einem Schaltgitter, bevorzugt bestehend aus mindestens einer Gitterelektrode, zu einem Ionendetektor ausgebildeten zylindrischen Driftraum auf. Der Driftraum ist dabei ferner so ausgebildet, dass der Ionenstrom darin entgegen einer axialen Driftgasströmung erfolgt. Die Driftgasströmung erfolgt mithin aus Richtung des Ionendetektors in Richtung des Schaltgitters. Eine Driftgeschwindigkeit hängt dabei sowohl von der Einwirkung eines elektrischen Feldes zwischen Schaltgitter und Ionendetektor als auch von der Wechselwirkung der Ionen mit der Driftgasströmung ab. Bevorzugt stellt sich bei einem gegebenen elektrischen Feld und einer gegebenen Driftgasströmung für einen bestimmten Ionen-Typ eine konstante Driftgeschwindigkeit ein, so dass keine makroskopische Beschleunigung der Ionen in dem Driftraum erfolgt. Die axiale Richtung bezieht sich im Rahmen der vorliegenden Offenbarung auf die Höhe des zylindrischen Driftraums.

Das lonenmobilitätsspektrometer der vorliegenden Offenbarung weist ferner einen an den Driftraum in axialer Richtung angrenzenden zylindrischen Reaktionsraum auf. Die axiale Richtung bezieht sich dabei auf die Höhe des zylindrischen Reaktionsraums und ist bevorzugt identisch zu der axialen Richtung des zylindrischen Driftraums. Der Reaktionsraum weist erfindungsgemäß einen an das Schaltgitter benachbarten Probengaseinlass zum Einleiten des Probengases auf. Dabei ist der Probengaseinlass derart ausgebildet, dass sich das Probengas mit dem Driftgas vermischt, wie nachstehend im Detail erläutert. Der Probengaseinlass befindet sich dabei auf einer dem Driftraum abgewandten Seite benachbart zu dem Schaltgitter. An dem gegenüberliegenden Ende des Reaktionsraums weist dieser einen Gasauslass zum Ableiten von Driftgas und von Probengas, sprich der Mischung dieser Gase, auf. Ferner ist an dem Gasauslass des erfindungsgemäßen lonenmobilitätsspektrometers eine lokale Ionisierungsquelle angeordnet. Bevorzugt beträgt die Reichweite, in der eine Ionisierung der Probe um die lokale Ionisierungsquelle stattfindet, weniger als 5 mm, so dass der Hauptanteil der erzeugten Primär-Ionen in unmittelbarer Nähe der Quelle erzeugt wird.

Erfindungsgemäß weist der Probengaseinlass gegenüberliegende und an einem Innenumfang des Reaktionsraums angeordnete Gaseinlässe auf. Ein solcher Probengaseinlass ermöglicht, dass Probengasstrom und Driftgasstrom auf vorteilhafte Weise vereinigt werden und gemeinsam in unidirektionaler Strömungsanordnung zu dem Gasauslass geleitet werden, wobei eine optimale Umströmung der lokalen Ionisierungsquelle erfolgt. Bevorzugt weist der Probengaseinlass paarweise gegenüberliegende und an einem Innenumfang des Reaktionsraums angeordnete Gaseinlässe auf. Prinzipiell ist jedoch auch denkbar, dass einem Gaseinlass auf einer Seite zwei gegenüberliegende Gaseinlässe zugeordnet sind. Bei der bevorzugten paarweisen Anordnung weist der Probengaseinlass zumindest ein Paar gegenüberliegender Gaseinlässe, bevorzugt jedoch eine Vielzahl solcher Paare auf. Wesentlich ist nicht die Anzahl der gegenüberliegenden Gaseinlässe, sondern dass mit der konkreten Anordnung der Gaseinlässe erzielte Strömungsbild, das nachfolgend erläutert ist.

Hinsichtlich des Zusammenführens der Gasströme in einem lonenmobilitätsspektrometer mit einem Driftraum und einem angrenzendem Reaktionsraum unterscheidet man in der Regel die Varianten der Gasführung mit bidirektionaler oder unidirektionaler Gasströmung. Bei bidirektionaler Strömung weisen der Driftgasstrom und der Probengasstrom in entgegengesetzte Richtung und werden über einen gemeinsamen Ausgang in einem Übergangsbereich abgeführt. Liegt dieser nahe dem Driftraum, können nachteilig ein Teil des neutralen Probengasstroms und die darin befindliche Feuchtigkeit in den Driftraum gelangen. Der Probengasstrom und der Ionenstrom weisen in die gleiche Richtung. Werden zur Ionisierung Plasmaquellen verwendet, so können gebildete NO_{X}-Verbindungen durch gerichtete und ungerichtete Bewegungen in den Reaktionsraum gelangen, wo sie wegen ihrer hohen Elektronenaffinität die Bildung von negativen Produkt-Ionen der zu analysierenden Probe hemmen.

Bei einer unidirektionalen Strömungsführung vereinigen sich der Driftgasstrom und der Probengasstrom im Reaktionsraum zu einem resultierenden Strom, der dem Ionenfluss entgegen gerichtet ist. Ohne ein elektrisches Feld würden somit auch die im Reaktionsraum erzeugten Ionen direkt zum Gasauslass gelangen.

Bei einer unidirektional umströmten lokalen Ionisierungsquelle besteht der Vorteil, dass die durch Ozon und Radikale wie Stickstoffmonoxid gebildeten neutralen NO_{X}-Verbindungen direkt zum Gasauslass gelangen und daher nicht weiter ionisiert werden können. Problematisch ist jedoch, dass NO_{X}-Verbindungen in der Regel eine höhere lonenmobilität aufweisen, als die zu analysierenden Produkt-Ionen, welche bei zu hoher Strömungsgeschwindigkeit und zu geringer Feldstärke bevorzugt zum Ausgang gespült würden. Die optimale Umströmung der lokalen Ionisierungsquelle hat daher eine entscheidende Bedeutung bei der Erzeugung eines maximalen Produkt-Ionen-Signals, auch weil viele Stoffe zudem eine geringere Elektronenaffinität als NO_{X}-Verbindungen besitzen und folglich in geringer Konzentration nicht nachweisbar wären. Der erfindungsgemäße Probengaseinlass ermöglicht es vorteilhaft auch Ionen mit sehr geringer lonenmobilität zu detektieren. Somit lässt sich mit dem erfindungsgemäßen Ionenmobilitätsspektrometer vorteilhaft ein Mindestgasstrom derart einstellen, dass die Bildung von NO_{X}-Verbindungen und deren Ionisierung im Reaktionsraum unterdrückt werden.

In einer bevorzugten Ausführungsform des erfindungsgemäßen lonenmobilitätsspektrometers sind der Driftraum und der Reaktionsraum kreiszylinderförmig ausgebildet. Mit anderen Worten weist der Driftraum und der Reaktionsraum eine kreisförmige Querschnittsfläche auf, wobei eine radiale Richtung dieser Kreisflächen senkrecht zu der jeweiligen axialen Richtung ist. Besonders bevorzugt sind die kreisförmigen Querschnittsflächen von Driftraum und Reaktionsraum konzentrisch zueinander, die axialen Richtungen stimmen mithin überein. Erfindungsgemäß ist der Gasauslass des Reaktionsraums mit Bezug zur axialen Richtung konzentrisch zu dem Reaktionsraum und dem Driftraum angeordnet. Gemäß dieser bevorzugten Ausführungsform erfolgt die Zuführung des Probengases durch die Gaseinlässe vorteilhaft mit radialen Strömungskomponenten. Dies ermöglicht eine besonders effiziente Vereinigung von Probengasstrom und Driftgasstrom zu einem unidirektionalen Gasstrom entlang der axialen Richtung sowie eine optimale Umströmung der lokalen Ionisierungsquelle.

In einer besonders bevorzugten Ausführungsform ist der Probengaseinlass, insbesondere die bevorzugt paarweise gegenüberliegenden Gaseinlässe, derart ausgebildet, dass sich radiale Komponenten der Strömungsgeschwindigkeiten von durch, bevorzugt paarweise, gegenüberliegende Gaseinlässe geleiteten Teilströmen des Probengases gegenseitig kompensieren. Bevorzugt sind die Gaseinlässe mithin so angeordnet und ausgebildet, dass eine Kompensation der radialen Einströmung von Trägergas (mit oder ohne Probe) derart erfolgt, dass kein Gasstrom an der gegenüberliegenden Außenwand des Reaktionsraums gelangt. Dies wird besonders bevorzugt über paarweise entgegengesetzte Strömungen aus paarweise gegenüberliegenden Gaseinlässen erreicht. Wesentlich ist jedoch, dass die resultierende radiale Geschwindigkeitskomponente des eingeleiteten Probengasstroms bzw. der radialen Gesamtfluss dieses Gasstroms auf null gebracht wird. Erfindungswesentlich ist somit, dass die Gaseinlässe am Rand derart angeordnet sind, dass die Summe der Teilströme den radialen Fluss zur Außenwandung des Reaktionsraums verhindert. Es könnte dabei prinzipiell auch eine Einströmung auf einer Seite durch zwei oder mehrere Einströmungen auf der gegenüberliegenden Seite kompensiert werden. Bevorzugt ist aber ein paariges, symmetrisches Anordnen (punktsymmetrisch zur axialen Richtung) der Gaseinlässe.

Bei der Berechnung der lonenmobilität wird in der Regel vorausgesetzt, dass das Driftgas stets dieselben physikalisch-chemischen Eigenschaften besitzt, so dass der Stoßquerschnitt des zu untersuchenden Ions gleichbleibt. Verwendet man insbesondere Luft als Driftgas, so ändert jedoch der darin enthaltene Anteil an Wasser bei einigen (insbesondere negativ geladenen) Ionen aufgrund der lon-Dipolwechselwirkung den Wert der lonenmobilität deutlich, was die Unterscheidbarkeit vieler Molekül-Ionen beeinträchtigt.

Der Einfluss der lon-Dipolwechselwirkung nimmt mit zunehmender Temperatur ab, jedoch ist die Erzeugung hoher Temperaturen und Wärmeisolation in mobilen IMS-Geräten nur schwer wirtschaftlich realisierbar. Der nachteilige Feuchteeinfluss auf die lonenmobilität lässt sich durch die Verwendung definierter, trockener Luft mit einer absoluten Wasserkonzentration kleiner 100 ppm stark reduzieren. Diese Trockenheitsforderung im Driftraum lässt sich bei abgedichteten IMS-Geräten prinzipiell mit geeigneten Filtern über eine lange Zeit aufrecht halten.

Damit der Driftraum einen möglichst kontaminationsfreien und trockenen Zustand behält, wird dieser durch einen kontinuierlichen Driftgasfluss (hierin synonym mit Driftgasstrom verwendet) durchströmt. Ein Gasfluss ist die über eine Querschnittsfläche (Strömungsquerschnitt) integrierte Gasflussdichte. Die Gasflussdichte wiederum ist das Produkt aus Gaskonzentration und Gasgeschwindigkeit. Der Gasfluss im Driftraum ist dem Ionenfluss überlagert und kann die effektive Driftzeit beeinflussen. Um diesen Einfluss gering oder vernachlässigbar zu halten, besitzt die Driftgasgeschwindigkeit im Vergleich zur Driftgeschwindigkeit der Ionen (z.B. 4 m/s) einen vergleichsweise kleineren Wert (z. B. 4 cm/s).

Die Zufuhr der Probe erfolgt wie beschrieben über einen oder mehrere Einlässe in den Reaktionsraum. Über den Probengasstrom (hierin synonym mit Probengasfluss verwendet), gelangt nicht nur vom Trägergasstrom (hierin synonym mit Trägergasfluss verwendet) geführt die zu detektierende Probe in den Reaktionsraum, sondern ebenfalls Anteile von Wasser. Sofern diese in den Driftraum gelangen, bewirkt dies wiederrum eine undefinierte Beeinflussung der Drifteigenschaften. Mit dem erfindungsgemäßen Probengaseinlass, insbesondere einem radialen Strömungsverteiler, wird die Probengasströmung vorteilhaft so aufgeteilt, dass sich zumindest zwei Teilströmungen in radialer Austrittsrichtung hinsichtlich der radialen Geschwindigkeitskomponenten auf der Mittelachse (axiale Richtung) im Reaktionsraum kompensieren und mit dem trockenen Driftgasstrom vermischen und weiter in Richtung Reaktionsraum ausweichen. Ein wesentlicher Vorteil der erfindungsgemäßen Anordnung ist, dass durch die radiale gegenseitige Strömungskompensation und der Überlagerung mit dem senkrecht dazu verlaufenden hinreichend großen Driftgasstrom keine Anteile des Probengasstroms in den Driftraum gelangen. Somit bleibt die geforderte Trockenheit im Driftraum vorteilhaft dauerhaft erhalten.

In einer ferner bevorzugten Ausführungsform des erfindungsgemäßen lonenmobilitätsspektrometers weist der Probengaseinlass einen umfänglich um den Reaktionsraum verlaufenden Einströmring auf. Häufig sind Driftraum und Reaktionsraum eines lonenmobilitätsspektrometers nicht monolithisch ausgeformt, sondern bestehen aus einer Vielzahl miteinander verbundener Ringstrukturen, beispielsweise um die Integration einer Vielzahl von Drift-Elektroden im Driftraum zu ermöglichen. In solch einer Ausführungsform ist der Einströmring bevorzugt entsprechend zu den weiteren Ringen des Reaktionsraums ausgeformt, um eine einfache Integration des Einströmrings in das lonenmobilitätsspektrometer zu ermöglichen. Der Einströmring weist dabei bevorzugt zumindest einen Strömungskanal auf, der eine Probengaszuleitung und zumindest einen Gaseinlass verbindet. Der Strömungskanal ist dabei bevorzugt als ein innenliegender Hohlraum des Einströmrings ausgebildet. Ebenfalls bevorzugt ist der Strömungskanal als eine Vertiefung auf einer axial ausgerichteten Oberfläche des Einströmrings ausgebildet, so dass sich ein geschlossener und dichter Strömungskanal durch Fügen des Einströmrings mit einem benachbarten Ring des Reaktionsraums ergibt. Die Probengaszuleitung bezeichnet dabei eine Einströmöffnung für das Einleiten des Probengasstroms (oder Trägergasstroms ohne Probe) von einer externen Probengaszuführung.

Erfindungsgemäß löst ein solcher Einströmring das Problem der Vermeidung von Verschmutzungen des Driftraums durch das Probengas und ist vorteilhaft in ein lonenmobilitätsspektrometer integrierbar. Bevorzugt besteht der Einströmring aus inertem Material wie beispielsweise Edelstahl oder Keramik, um eine Langzeitbeständigkeit gegenüber teilweise aggressiven Probesubstanzen zu gewährleisten. Der Einströmring ist bevorzugt als Isolator ausgebildet. Alternativ bevorzugt ist der Einströmring als spannungsführender Feldstützring realisiert. Vorteilhaft sind bei der Verwendung eines solchen Einströmrings keine Strömungshindernisse im Reaktionsraum vorhanden, an denen sich nachteilig Probengas ansammeln kann, wodurch das Spülen des lonenmobilitätsspektrometers nach einer Detektion verlängert wird.

In einer besonders bevorzugten Ausführungsform des erfindungsgemäßen lonenmobilitätsspektrometers weist der Probengaseinlass paarweise gegenüberliegende und an dem Innenumfang des Reaktionsraums angeordnete Gaseinlässe auf. Ferner bevorzugt weist jedes Paar gegenüberliegender Gaseinlässe einen ersten Gaseinlass und einen zweiten Gaseinlass auf.

Gemäß dieser Ausführungsform ist die Probengaszuleitung über einen ersten Strömungskanal mit zumindest einem ersten Gaseinlass und über einen zweiten Strömungskanal mit zumindest einem zweiten Gaseinlass verbunden. Mit anderen Worten wird der Strömungskanal aufgespalten, um die ersten Gaseinlässe getrennt von den zweiten Gaseinlässen zu versorgen. Dies ermöglicht vorteilhaft eine besonders homogene Strömungsführung und eine besonders gute Kompensation der radial entgegengesetzten Gasströmungen.

Erfindungsgemäß kann jedem ersten Gaseinlass ein entsprechender erster Strömungskanal und jedem zweiten Gaseinlass ein entsprechender zweiter Strömungskanal zugeordnet sein. Das heißt, jeder Gaseinlass wird über einen eigenen Strömungskanal versorgt. Ebenfalls bevorzugt sind mehrere erste Gaseinlässe gemeinsam über einen ersten Strömungskanal mit dem Probengaseinlass verbunden und sind mehrere zweite Gaseinlässe gemeinsam über einen zweiten Strömungskanal mit dem Probengaseinlass verbunden. Ebenfalls bevorzugt sind alle Strömungskanäle mit einer einzelnen Gaszuleitung verbunden. Es ist jedoch auch möglich, dass mehrere Gaszuleitungen vorgesehen sind, beispielsweise eine Gaszuleitung pro Strömungskanal oder per Gruppe von (ersten und zweiten) Strömungskanälen.

Ebenfalls bevorzugt sind alle ersten Gaseinlässe gemeinsam über einen ersten Strömungskanal mit dem Probengaseinlass verbunden und sind alle zweiten Gaseinlässe gemeinsam über einen zweiten Strömungskanal mit dem Probengaseinlass verbunden. Besonders bevorzugt wird dabei der Probengaseinlass in zwei Kanäle gabelförmig symmetrisch aufgespalten in einen ersten und zweiten Strömungskanal, jeweils entlang etwa des halben Ringumfanges. Somit teilt sich der ursprüngliche Volumenstrom des Probengases in zwei halb so große Volumenströme auf. In einem einfachsten Fall erhält der Einströmring zwei symmetrisch sich gegenüberliegend angeordnete kreisförmige oder geschlitzte Gaseinlässe, die in radialer Richtung zur Mittelachse des Reaktionsraums weisen. Insbesondere bei großem Volumenstrom des Proben- beziehungsweise Trägergases und/oder wegen möglicher Fertigungstoleranzen kann es bei kleinen Öffnungsquerschnitten der Gaseinlässe dazu kommen, dass sich die Teilströme verfehlen, was eine Strömungskompensation erschwert. Bevorzugt weist der Einströmring daher im ersten und zweiten Strömungskanal jeweils eine Vielzahl von, bezogen auf die axiale Richtung, punktsymmetrisch gegenüberliegen Gaseinlässen auf.

In einer ferner bevorzugten Ausführungsform des erfindungsgemäßen lonenmobilitätsspektrometers sind in zumindest einem Strömungskanal Strömungshindernisse zum Umlenken eines Probengasstroms durch die Gaseinlässe angeordnet. Die Strömungshindernisse sind dabei bevorzugt so ausgebildet, dass diese ein möglichst laminares Einströmen des Probengasstroms ermöglichen und/oder eine gleichmäßige Aufteilung des Probengasstroms im jeweiligen Strömungskanal auf die von diesem Strömungskanal abgehenden Gaseinlässe bewirken. Besonders bevorzugt werden entlang jedes Strömungskanals kammförmige Strömungswiderstände stromabwärts jedes Gaseinlasses eingeführt, so dass sich die Strömung geführt durch die Zähne (Teilwiderstände) des Kammes über mehrere Gaseinlässe verteilt und die Strömung somit über einen größeren Querschnitt austritt. Ferner wird durch die Form (Höhe und Breite), Anzahl und Verteilung der Zähne entlang des Kanals ein gleichmäßiger radialer Austritt der in der Geschwindigkeit geminderten Teilströme erreicht, die sich zuverlässig mittig im Reaktionsraum treffen und in der Radialgeschwindigkeit kompensieren.

Besonders bevorzugt weist zumindest ein Strömungskanal des Einströmrings eine Mehrzahl von Gaseinlässen auf, wie obenstehend beschrieben. Gemäß dieser Ausführungsform ist bevorzugtjeweils ein Strömungshindernis zum Umlenken eines Probengasstroms zwischen zwei Gaseinlässen angeordnet. Handelt es sich bei dem Strömungskanal beispielsweise um eine umfänglich verlaufende Vertiefung in dem Einströmring, sind die Gaseinlässe bevorzugt durch radial von dem Strömungskanal abgehende und eine Innenwandung des Einströmrings durchbrechende Vertiefungen ausgebildet. Die Strömungshindernisse sind dabei bevorzugt aus dem zwischen den radial ausgebildeten Vertiefungen verbleibenden Material des Einströmrings ausgebildet. Besonders bevorzugt weist die umfängliche Vertiefung im Bereich der radialen Vertiefungen und Strömungshindernisse eine geringere Breite auf als im Bereich des Probengaseinlasses ohne abzweigende Gaseinlässe. Besonders bevorzugt sind die Strömungshindernisse dazu ausgebildet, die durch Gaseinlässe austretenden Teilströme des Probengases hinsichtlich Volumenstrom und/oder Geschwindigkeit zu nivellieren.

In einer ebenfalls bevorzugten Ausführungsform des lonenmobilitätsspektrometers gemäß der vorliegenden Erfindung weist der Gasauslass des Reaktionsraums einen geringeren Strömungsquerschnitt auf als der Reaktionsraum und/oder der Driftraum. Besonders bevorzugt ist der Strömungsquerschnitt des Reaktionsraums geringer als der Strömungsquerschnitt des Driftraums und ist der Strömungsquerschnitt des Gasauslasses geringer als der Strömungsquerschnitt des Reaktionsraums. Die zunehmende Verjüngung der Strömungsquerschnitte bewirkt dabei vorteilhaft eine Erhöhung der vereinigten Gasströme an der lokalen Ionisierungsquelle. Besonders bevorzugt weist der Gasauslass eine Blende oder ein Kapillarrohr mit einem Durchmesser von 2 mm bis 10 mm auf. Gemäß dieser Ausführungsform wird vorteilhaft sichergestellt, dass eine Strömungsgeschwindigkeit eines Gesamtgasstroms aus Probengasstrom und Driftgasstrom in einem Bereich von 2 mm um die lokale Ionisierungsquelle bei mindestens 50 cm/s beträgt. Bei dem Driftmedium handelt es sich bevorzugt um Luft mit einer Wasserkonzentration von weniger als 100 ppm und die Strömungsgeschwindigkeit des Driftmediums liegt bevorzugt bei 2 cm/s bis 10 cm/s. Die Strömungsgeschwindigkeiten werden ferner durch die Betriebsparameter, beispielsweise Volumenstrom oder Massenfluss, Pumpendrehzahl, Pumpenleistung oder Ventilöffnung, einer Driftgaszuführung und/oder einer Probengaszuführung erzielt. Die geringe Wasserkonzentration wird bevorzugt durch den Einsatz von Molekularsieb und/oder geeigneter (Membran-) Filter sichergestellt.

In einer ebenfalls bevorzugten Ausführungsform des erfindungsgemäßen lonenmobilitätsspektrometers ist die lokale Ionisierungsquelle für eine dielektrische Barriereentladung konfiguriert. Mit anderen Worten handelt es sich bei der lokalen Ionisierungsquelle um eine dielektrisch behinderte Entladungsquelle, wobei sämtliche Elektroden durch ein plasmaresistentes Dielektrikum geschützt sind. Die Ionisierungsquelle für eine dielektrische Barriereentladung ist geeignet und konfiguriert zum Erzeugen eines Niedertemperatur-Plasmas. Der Einsatz von Niedertemperatur-Plasma zur Ionenerzeugung in lonenmobilitätsspektrometer ist prinzipiell aus dem Stand der Technik bekannt. Es sind unterschiedliche Ausführungsformen für solche Methoden bekannt. Die Durchschnittstemperatur bei einem Niedertemperatur-Plasma entspricht annähernd der Umgebungstemperatur. Das im Mittel ladungsneutrale Plasma besteht aus einem Gemisch von negativen Ladungsträgern wie Elektronen und Ionen, positiv geladenen Ionen und Neutralteilchen. Voraussetzung für die Entstehung eines derartigen Plasmas sind hohe reduzierte elektrische Feldstärken, die durch das Anlegen einer hohen Spannung an den Elektroden erreicht werden. Aufgrund der Abhängigkeit von der reduzierten elektrischen Feldstärke ist der Zündvorgang sowohl druck- als auch temperaturabhängig. Gemäß dem PASCHEN-Gesetz ist für die Entstehung des Plasmas eine Mindestzündspannung notwendig, die für Gleich- und Wechselspannung unterschiedlich sein kann. Da bei der Plasmabildung komplexe kinetische Prozesse ablaufen, ist die Zündspannung auch explizit von der Temperatur abhängig. Nach dem erfolgreichen Zünden des Plasmas kann es in der Regel mit geringeren Spannungen aufrechterhalten werden.

Zum Schutz der Elektroden einer dielektrisch behinderten Entladungsquelle vor Korrosion sind diese teilweise oder sämtlich durch ein Dielektrikum vom Plasma getrennt. Da kein Ladungstransfer durch diese Isolierung erfolgt, ist das Plasma nur mittels Wechselspannung erzeugbar. Zum Vermeiden von Energieverlusten infolge der Kollisionen der Ladungen am Isolator werden Wechselspannungen mit hohen Frequenzen verwendet, insbesondere mit Frequenzen größer 40 kHz. Infolge der Massenträgheit der Ionen und der Elektronen erfolgen bei einer solchen Spannung weniger Stöße an der Wandung des Dielektrikums oder des Ionenmobilitätsspektrometers. Eine solche Quelle ist bevorzugt realisiert durch einen mit den Edelgasen Helium, Krypton oder Argon gefüllten gasdichten Glaskörper, an den ein hochfrequentes Hochspannungsfelds zum Erzeugen von Vakuum-UV-Strahlung angelegt wird. Die Vakuum-UV-Strahlung verlässt den Glaskörper über ein für den Spektralbereich durchlässiges dünnes Fenster und bewirkt die Fotoionisierung des Probengases, wobei die Elektroden durch das Glas isoliert sind und sich außerhalb des Plasmas befinden. Ebenfalls bevorzugt werden Elektroden benutzt, die vollständig durch einen Plasma-beständigen Isolator wie Korona-beständiges Polyimid oder einer Glasbeschichtung geschützt sind. Besonders bevorzugt werden Drahtelektroden verwendet, deren Drähte beispielsweise aus Wolfram gebildet und mit dünnem Glas isoliert sind. Eine solche Drahtelektrode ist beispielsweise in Coy et al. 2016. A Gapless Micro-Dielectric-Barrier-Discharge Ion Source for Analytical Applications. ArXiv e-prints, 2016. 1602. http://arxiv.org/abs/1602.06242 beschrieben, auf deren Inhalt hiermit vollumfänglich Bezug genommen wird. Wird eine solche Elektrode mit hochfrequenter Hochspannung beaufschlagt, bildet sich Plasma an den Drahtberührungspunkten. Bereits Coy et al. beobachteten die Bildung von NO_{X}-Verbindungen an solchen Drahtelektroden. Zwar ist eine netzartige Anordnung derartiger Elektroden, in der sich Drähte paarweise wie beim Einzelkontakt berühren, für eine Verwendung in einem lonenmobilitätsspektrometer besonders vorteilhaft, jedoch steigt die Menge unerwünschter Nebenprodukte.

Bei der Verwendung einer solchen Plasmaquelle wird das Plasma unter Atmosphärenbedingungen, bei welchem das erfindungsgemäße lonenmobilitätsspektrometer betrieben werden soll, in einer Zone von wenigen Millimetern zwischen den Elektroden erzeugt. Daher sind derartige Elektrodenanordnungen lokale Ionisierungsquellen und im Speziellen lokale Plasmaquellen. Bei der Bildung des Plasmas wird dessen Zusammensetzung ausgehend von den in Luft maßgeblich vorhandenen Molekülen (molekularer Sauerstoff und Stickstoff) durch chemische Reaktionen der Ionen und Neutralgasteilchen bestimmt, wobei als Nebenproduktionen auch Ozon und Sauerstoffverbindungen des Stickstoffs entstehen. Die unter Atmosphärendruck lokal begrenzt gebildeten Ionen werden je nach Ladung durch ein dem Entladungsfeld überlagertes elektrisches Feld aus der unmittelbaren Umgebung der Plasmabildungszone herausgezogen.

Im erfindungsgemäßen lonenmobilitätsspektrometer wird der mit dem Driftgasstrom vermischte und getrocknete Probengasstrom im Reaktionsraum zur lokalen Ionisierungsquelle geführt. In unmittelbarer Umgebung der Quelle erfolgt die Ionisierung und Bildung von Primär-Ionen sowie von unerwünschten Nebenprodukten wie NO_{X} und Ozon. Die Erfinder haben durch Experimente und vergleichende Computersimulationen überraschend festgestellt, dass mit einer Strömungsgeschwindigkeit des Gesamtgasstroms von mehr als 50 cm/s in einer unmittelbaren Umgebung der Ionisierungsquelle von ca. 2 mm Durchmesser die Bildung dieser unerwünschten Nebenprodukte unterdrückt werden kann. Bei herkömmlichen lonenmobilitätsspektrometern erreichen die Gasvolumenströme im Reaktionsraum keine derart hohe Geschwindigkeit. Im erfindungsgemäßen lonenmobilitätsspektrometer kann eine solche Geschwindigkeit erreicht werden, indem der Strömungskanals verengt (verjüngt) wird.

Bevorzugt ist der Reaktionsraum trichterförmig ausgestaltet mit einem Strömungsquerschnitt nahe der Quelle (deutlich) kleiner als der Strömungsquerschnitt nahe des Schaltgitters. Dies erfordert bei einem aus Feldstützringen und Isolatoren aufgebauten Reaktionsraum jedoch die Verwendung unterschiedlicher Segmentelemente, was Kosten und Aufwand der Herstellung erhöht. Bevorzugt wird eine ausreichend hohe Strömungsgeschwindigkeit daher durch Platzieren eines engen Strömungskanals als Kapillarrohr oder als Blende mit kleinem Innendurchmesser von beispielsweise 4 mm in unmittelbarer Nähe der lokalen Ionisierungsquelle, beispielsweise im Abstand von 2 mm erreicht. Eine solche Blende ist bevorzugt stromabwärts der Quelle angeordnet, um Ablagerungen zu vermeiden.

Besonders bevorzugt ist die lokale Ionisierungsquelle im erfindungsgemäßen lonenmobilitätsspektrometer im Gasauslass platziert und weist der Gasauslass einen Strömungsquerschnitt von 6 mm oder weniger auf. Die Anordnung im Gasauslass bezeichnet dabei bevorzugt auch eine Anordnung der Ionisierungsquelle im Reaktionsraum nahe dem Gasauslass. Die Strömungsgeschwindigkeit des Gasstroms erhöht sich entsprechend des Verhältnisses vom Strömungsquerschnitt des Reaktionsraums zum Strömungsquerschnitt im Gasauslass. Vorteilhaft werden im erfindungsgemäßen lonenmobilitätsspektrometer unerwünschte Reaktionsprodukte der Ionisierungsquelle somit direkt durch den Gasauslass abgeführt, wobei auch eine Rückströmung oder Diffusion in den Reaktionsraum unterbunden wird. Ist die lokale Ionisierungsquelle gemäß *Coy et al.* mit sich kreuzenden glasisolierten Drähten aufgebaut und nahe oder im Gasauslass angeordnet, bewirkt der geringere Durchmesser des Gasauslasses vorteilhaft eine mechanische Schwingungsstabilisierung der Ionisierungsquelle.

In einer ebenfalls bevorzugten Ausführungsform des lonenmobilitätsspektrometer gemäß der vorliegenden Offenbarung weist dieses ferner zumindest eine im Reaktionsraum angeordnete Potentialquelle zum Erzeugen eines elektrischen Felds zum Abtransport von an der lokalen Ionenquelle gebildeten Ionen in Richtung des Driftraums auf. Diese Potentialquelle ermöglicht es vorteilhaft an der Ionisierungsquelle gebildete Primär-Ionen von dieser abzutransportieren und somit eine Rekombination der Ionen an der Quelle zu verhindern. Ebenfalls bevorzugt ist das mittlere elektrische Potential der lokalen Ionisierungsquelle an das Potential des umgebenden Reaktionsraumes gekoppelt, um eine Optimierung der Bildungsrate der Produkt-Ionen zu erzielen. Besonders bevorzugt wird ein im Reaktionsraum befindlicher Feldstützring in unmittelbarer Nähe der Ionisierungsquelle als Potentialquelle verwendet. Mittels der Potentialquelle und dem Feld der Ionisierungsquelle als Bezugspotential ergibt sich ein axiales Feld für den Transport der Primär-Ionen in den Reaktionsraum. Zudem lässt sich mittels der Potentialquelle, die bevorzugt als Feldstützring dient, im Reaktionsraum auch ein radialer Feldanteil bezogen auf die Ionisierungsquelle und somit eine Aufweitung des im Durchmesser zunächst geringen Primär-Ionenstrahls erreichen. Bevorzugt befindet sich die Potentialquelle, beispielsweise der nächstliegende Feldstützring, daher auf einem im Vergleich zum mittleren Potential der lokalen Ionisierungsquelle erhöhten Potential und umschließt in geringer Entfernung die lokale Ionisierungsquelle zentrisch. Somit werden vorteilhaft auch die in einer größeren radialen Entfernung an der lokalen Ionisierungsquelle vorbeiströmenden neutralen Proben-Moleküle ionisiert. Vorteilhafterweise folgt im Anschluss eine Zone mit Driftgeschwindigkeitsreduzierung, die man durch einen geringen oder verschwindenden Potentialunterschied zum nächsten benachbarten Feldstützring in Richtung des Driftraums erzeugt. Somit werden die Verweilzeit der Primär-Ionen im Reaktionsraum und folglich auch die Wahrscheinlichkeit zur Produktionenbildung aus den Primär-Ionen erhöht.

Der effektive Abtransport der Primär-Ionen mittels der elektrischen Potentialquelle wirkt ferner vorteilhaft der unerwünschten Bildung von Ionen aus den NO_{X}-Verbindungen entgegen. Bei der Justierung der durch die Potentialquelle erzeugten Feldstärke ist zu berücksichtigen, dass bei einer zu geringen Feldstärke, Ionen zum Gasauslass gespült werden und/oder eine Rekombination von Ionen an der lokalen Ionisierungsquelle erfolgt. Somit ist eine ausreichende Feldstärke erforderlich, um in Verbindung mit dem hohen Gasstrom zum Unterdrücken der Bildung von neutralen NO_{X}-Verbindungen an der Plasmaquelle und deren Vordringen in den Reaktionsraum, den Transport von Ionen in den Reaktionsraum zu ermöglichen. Durch das Zusammenspiel einer hohen Strömungsgeschwindigkeit an der lokalen Ionisierungsquelle (>50 cm/s) und einer ausreichend hohen Feldstärke in Richtung des Reaktionsraums kann vorteilhaft ein Anwachsen des Primär-lonenflusses erzielt werden.

Ferner bevorzugt weist das lonenmobilitätsspektrometer gemäß der vorliegenden Offenbarung einen im Bereich des Ionendetektors angeordneten Driftgaseinlass auf. In einem zylindrischen Driftraum ist der Ionendetektor bevorzugt auf der dem Reaktionsraum abgewandten Deckfläche des Driftraums angeordnet. Zumindest ein Driftgaseinlas ist bevorzugt benachbart zu dem Detektor angeordnet, beispielsweise konzentrisch um einen kreisförmigen Detektor. Bevorzugt ist der Driftgaseinlass als eine konzentrisch um den Detektor angeordnete Ringöffnung ausgebildet, was vorteilhaft eine laminare Ausbildung der Driftströmung ermöglicht. Ebenfalls bevorzugt weist das lonenmobilitätsspektrometer gemäß der vorliegenden Offenbarung eine Driftgaszuführung zum steuer- oder regelbaren Zuleiten von Driftgas und eine Probengaszuführung zum steuer- oder regelbaren Zuleiten von Probengas auf. Die Zuführungen sind dabei vorzugsweise außerhalb von Reaktionsraum und Driftraum angeordnet, wobei die Probengaszuführung den Probengaseinlas über die Probengaszuleitung mit Probengas (Trägergas mit oder ohne Probenmaterial) speist und wobei die Driftgaszuführung den Driftgaseinlass mit Driftgas speist. Jede der Zuführungen kann hierfür eine oder mehrere Pumpen und/oder ein oder mehrere Ventile aufweisen sowie beispielsweise als Schläuche oder Verrohrungen ausgebildete Gaszuleitungen aufweisen. Die Ausbildung von Gaszuleitungen ist dem Fachmann bekannt und nicht Gegenstand dieser Anmeldung.

Ein weiterer Aspekt der vorliegenden Offenbarung betrifft ein Verfahren zum Betrieb eines lonenmobilitätsspektrometers zum Ermitteln einer lonenmobilitätsspektrums einer Probe, insbesondere ein Verfahren zum Betrieb eines lonenmobilitätsspektrometer gemäß der vorliegenden Offenbarung wie vorstehend beschrieben. Das erfindungsgemäße Verfahren weist dabei die im Folgenden beschriebenen Verfahrensschritte auf. In einem ersten Verfahrensschritt des erfindungsgemäßen Verfahrens erfolgt das Einstellen von ersten Betriebsparametern. Die ersten Betriebsparameter betreffen dabei den Betrieb einer lokalen Ionisierungsquelle, einer Driftgaszuführung zum Zuführen von Luft als Driftgas und/oder einer Probengaszuführung des lonenmobilitätsspektrometers zum Erzeugen von NO_{X}-Ionen an der lokalen Ionisierungsquelle sowie zum Eintrag der erzeugten NO_{X}-Ionen in einen Driftraum des lonenmobilitätsspektrometers. Die ersten Betriebsparameter sind dabei derart gewählt, dass eine Bildung von NO_{X}-Verbindungen an der lokalen Ionisierungsquelle und deren Eintrag in den Driftraum so bewirkt wird, dass die Konzentration der NO_{X}-Verbindungen im Driftraum das Ermitteln eindeutiger NO_{X}-Peaks in einem IMS-Spektrum ermöglicht. In einem weiteren Schritt des erfindungsgemäßen Verfahrens wird eine erste Driftzeit t_{NOX} der NO_{X}-Ionen durch den Driftraum des lonenmobilitätsspektrometers gemessen. Die Driftzeitmessung erfolgt dabei unter Beibehaltung der ersten Betriebsparameter sowie vorliegender aktueller Driftraumbedingungen, beispielsweise bei einer aktuellen Driftraumtemperatur T.

In einem weiteren Schritt des erfindungsgemäßen Betriebsverfahrens erfolgt das Einstellen von zweiten Betriebsparametern der lokalen Ionisierungsquelle, der Driftgaszuführung und/oder der Probengaszuführung, wobei die zweiten Betriebsparameter das Erzeugen von Proben-Ionen ohne Bildung von NO_{X}-Ionen an der lokalen Ionisierungsquelle und/oder das Vermeiden des Eintrags von NO_{X}-Ionen in den Driftraum betreffen beziehungsweise bewirken. Mit anderen Worten sind die zweiten Betriebsparameter derart gewählt, dass sich im Driftraum des lonenmobilitätsspektrometers derart geringe Konzentration von NO_{X}-Verbindungen einstellen, dass keine NO_{X}-Peaks in einem IMS-Spektrum vorhanden sind. In einem weiteren Schritt des erfindungsgemäßen Verfahrens erfolgt das Messen einer zweiten Driftzeit t_{P} der Proben-Ionen durch den Driftraum des lonenmobilitätsspektrometers. Die Driftzeitmessung erfolgt dabei unter Beibehaltung der zweiten Betriebsparameter sowie der vorliegenden aktuellen Driftraumbedingungen, wie der aktuellen Driftraumtemperatur T.

Im erfindungsgemäßen Verfahren erfolgt ferner das Ermitteln einer normierten lonenmobilität der Probe K₀^{P}(T) anhand der gemessenen ersten Driftzeit t_{NOX}, der gemessenen zweiten Driftzeit t_{P} und einer normierten lonenmobilität der NO_{X}-Ionen K₀^{R}(T) als Referenz gemäß K₀^{P}(T)=t_{NOX}/t_{P}* K₀^{R}(T). Die normierte lonenmobilität der NO_{X}-Ionen K₀^{R}(T) ist dabei bevorzugt einer Referenztabelle entnommen, welche die bekannten Werte der normierten lonenmobilität der NO_{X}-Ionen enthält, die bevorzugt für das im Verfahren verwendete lonenmobilitätsspektrometer in einem Teststand ermittelt worden sind, insbesondere für eine Vielzahl von Driftraumtemperaturen. Besonders bevorzugt kann K₀^{R}(T) aus einer mathematischen Interpolationsfunktion berechnet werden, deren Interpolationsparameter sich aus den im Teststand ermittelten Messwerten ergibt. Die normierte lonenmobilität von NO_{X}-Ionen wird in der Ionenmobilitätsspektroskopie häufig als Referenzwert genutzt und entsprechende Werte hierfür sind mithin verfügbar. Das erfindungsgemäße Verfahren ermöglicht jedoch eine interne Erzeugung von NO_{X}-Ionen als Referenz (Kalibrant) in einem ersten Betriebsmodus eines lonenmobilitätsspektrometer und ermöglicht eine Referenz-basierte Messung eines IMS-Spektrums einer Probe in einem zweiten Betriebsmodus des lonenmobilitätsspektrometers.

In einer bevorzugten Durchführungsform des erfindungsgemäßen Verfahrens stoppen oder verringern die ersten Betriebsparameter die Probenzuführung. Gegebenenfalls wird weiterhin Trägergas ohne darin enthaltenes Probenmaterial eingeleitet, um weitgehend ähnliche Strömungsverhältnisse in allen Betriebsmodi zu realisieren. Ebenfalls bevorzugt stellen die ersten Betriebsparameter eine Fördermenge der Probengaszuführung und/oder der Driftgaszuführung derart ein, dass eine Strömungsgeschwindigkeit an der lokalen Ionisierungsquelle auf bevorzugt unter 50 cm/s eingestellt wird. Die Strömungsgeschwindigkeit bezieht sich dabei auf einen Gesamtgasstrom an der Quelle.

Ebenfalls bevorzugt stellen die ersten Betriebsparameter eine Versorgungsspannung einer dielektrisch behinderten Entladungsquelle als lokale Ionisierungsquelle über eine vorbestimmte Grenzspannung ein. Die Grenzspannung ist dabei bevorzugt empirisch für das im erfindungsgemäßen Verfahren verwendete lonenmobilitätsspektrometer, und bevorzugt in Abhängigkeit von den Umgebungsbedingungen Druck und Temperatur an der Entladungsquelle, ermittelt worden und betrifft eine Spannung oberhalb der die Konzentration von NOX-Ionen über einem vorbestimmten Grenzwert liegt und unterhalb der diese Konzentration unter diesem Grenzwert ist.

Ebenfalls bevorzugt stellen die zweiten Betriebsparameter eine Fördermenge der Probengaszuführung und eine Fördermenge der Driftgaszuführung so ein, dass eine Strömungsgeschwindigkeit des Gesamtstroms an der lokalen Ionisierungsquelle bevorzugt über 50 cm/s beträgt. Ebenfalls bevorzugt stellen die zweiten Betriebsparameter die Versorgungsspannung der dielektrisch behinderten Entladungsquelle unter die vorbestimmte Grenzspannung ein. Neben den vorgenannten ersten und zweiten Betriebsparametern können für das im erfindungsgemäßen Verfahren genutzte lonenmobilitätsspektrometer weitere Betriebsparameter ermittelt werden, welche das Vorliegen von NO_{X}-Ionen im Driftraum signifikant beeinflussen.

Für den Nachweis vieler Stoffe in einem lonenmobilitätsspektrometer sind die im Zusammenhang mit dem Plasma erzeugten NO_{X}-Verbindungen nachteilig. Mit den zuvor beschriebenen Maßnahmen lässt sich deren Bildung beziehungsweise deren Eintrag in den Reaktionsraum und den Driftraum gezielt unterdrücken. Andererseits besitzen die Ionen der NO_{X}-Verbindungen in trockener, sauberer Luft charakteristische normierte lonenmobilitäten K₀^{R}(T), also Positionen (Peaks) im Driftzeitspektrum. In dem ersten Betriebszustand des lonenmobilitätsspektrometers, bevorzugt ohne externe Probenzufuhr, können diese Positionen zur Kalibration als interne Referenzen verwendet werden. Bevorzugt wird dieser erste Betriebszustand kurzzeitig, beispielsweise in einer Zeit kleiner 1s hergestellt. Ebenfalls bevorzugt wird der erste Betriebszustand durch Erhöhung der Hochspannungsamplitude sowie Absenkung des Gesamtgasflusses um die lokale Ionisierungsquelle erreicht, wobei nur die zur sicheren Auswertung notwendige spektrale Intensität erzeugt wird.

Nach dem Beenden der Kalibration muss sichergestellt werden, dass die NO_{X}-Verbindungen den Reaktionsraum verlassen und der ursprüngliche Messzustand hergestellt wird. Das erfindungsgemäße Verfahren weist daher ferner bevorzugt den Schritt Ausschleusen der NO_{X}-Ionen aus dem Reaktionsraum auf. Ebenfalls bevorzugt weist das erfindungsgemäße Verfahren den Schritt auf, dass parallel zum Schritt des Ausschleusen der NO_{X}-Ionen die Hochspannungsamplitude der Ionisierungsquelle mindestens unter die Grenzspannung gesenkt oder ausgeschaltet wird. Durch das Abschalten oder Absenkung der Hochspannung unterhalb der zum Aufrechterhalten des Plasmas notwendigen Spannung und mittels einer Spülung mit erhöhtem trockenen Driftgasfluss wird die Zeit zur Wiederherstellung des ursprünglichen Messzustands verkürzt. Unterschreitet nach dem Ausschleusen die Intensität für die Ionen der NO_{X}-Verbindungen einen vorbestimmten Schwellwert, so ist der ursprüngliche Messzustand wiederhergestellt. Zur Überprüfung muss kurzzeitig der zweite Messzustand hergestellt werden, mit welchem eine Probe gemessen würde, so dass das Driftzeitspektrum hinsichtlich der Bildung der NO_{X}-Ionen ausgewertet werden kann.

Wie vorstehend bereits erläutert, ist eine Unterdrückung der Ionenbildung aus NO_{X}-Verbindungen durch eine möglichst geringe Hochspannungsamplitude für die Zündung und Aufrechterhaltung des Plasmas möglich. Gleichzeitig hängt die minimale Zündspannung des Plasmas von der Gasdichte und damit nach dem idealen Gasgesetz von der Temperatur und dem absoluten Druck des Gases ab, wobei sich diese Werte während des Betriebs ändern können. Erfindungsgemäß erfolgt die Zündung und Aufrechterhaltung des Plasmas in Abhängigkeit von Temperatur und Druck des vorbeiströmenden Gases kontrolliert über eine Steuerung, welche die optimalen Hochspannungsparameter für Amplitude und Frequenz einstellt und bei Änderung nachführt. Zusätzlich erfolgt mittels dieser Steuerung eine Gasflussregulierung. Um die Zündung und Aufrechterhaltung des Plasmas bei minimaler Spannung zu gewährleisten, erfolgt ferner bevorzugt eine Messung der Gastemperatur und des -druckes in der Umgebung der Ionisierungsquelle über Sensoren sowie die Messung des Driftzeitspektrums. Das Integral über das ganze Driftzeitspektrum bzw. über ausgewählte Bereiche ist eine zusätzliche Steuergröße, die ein Maß für die lonenproduktion ist. Mittels der vorgenannten Steuerungen werden ferner bevorzugt der erste Betriebsmodus und zweite Betriebsmodus realisiert.

Das erfindungsgemäße lonenmobilitätsspektrometer wird bevorzugt mit trockener Luft (Wassergehalt von weniger 100 ppm) als Driftgas und ebenfalls trockenem Trägergas betrieben. Unter diesen Bedingungen wird das Zünden des Plasmas besonders erschwert. Hingegen fördert ein höherer Wassergehalt die Zündung des Plasmas in der Regel. Somit wird für das Zünden des Plasmas bei trockener Luft üblicherweise eine höhere Zündspannung benötigt.

Das erfindungsgemäße lonenmobilitätsspektrometer weist bevorzugt eine Strahlungsquelle auf, die zum Bestrahlen der lokalen Ionisierungsquelle mit Licht in einem Wellenlängenbereich von 480 bis 280 nm ausgebildet und eingerichtet ist. Es hat sich überraschend gezeigt, dass mittels einer solchen Bestrahlung der lokalen Ionisierungsquelle in trockener Luft mit einem Wassergehalt von weniger 100 ppm sowohl die Zündspannung des Plasmas erniedrigt als auch die Zeit zum Zünden des Plasmas verkürzt werden kann. Vorteilhaft ist im erwähnten Wellenlängenbereich eine optische Strahlungsleistung von weniger als 100 mW ausreichend, um die Plasmazündung signifikant zu unterstützen.

Besonders bevorzugt handelt es sich bei der Strahlungsquelle um eine Leuchtdiode mit Wellenlängen von 480 bis 280 nm. Dieser Wellenlängenbereich entspricht der zweiten positiven Serie von molekularem Stickstoff. Besonders bevorzugt ist die Strahlungsquelle dazu ausgebildet, die lokale Ionisierungsquelle mit Wellenlängen bei 405 nm zu bestrahlen. Besonders bevorzugt handelt es sich bei der Strahlungsquelle um eine Laserdiode mit entsprechender Wellenlänge, beispielsweise um eine Laserdiode wie sie üblicherweise in Blu-ray-Playern eingesetzt werden. Die lokale Plasmaquelle wird bevorzugt von mindestens einer Strahlungsquelle direkt, indirekt und/oder fokussiert über Glasfaserkabel beleuchtet. Die Bestrahlung erfolgt bevorzugt kurzzeitig bis zum Einsetzen der Ionisierung, welche im Driftzeitspektrum anhand der Intensitäten z.B. für die Reaktant-Ionen erkennbar ist. Ein Minimalwert der Intensität oder des Integrals in einem vorgegebenen Intervall lässt sich als Kriterium zum Ausschalten der Strahlungsquelle verwenden und eine Unterschreitung des Minimalwertes veranlasst das erneute Einschalten der Strahlungsquelle. Ebenfalls bevorzugt ist ein gepulster Dauerbetrieb der Strahlungsquelle. Die Pulsweite ist bevorzugt an die Umgebungsbedingungen wie Feuchtigkeit, Druck und Temperatur der Plasmaquelle angepasst.

Die Verfahrensschritte des erfindungsgemäßen Verfahrens können durch elektrische oder elektronische Bauteile oder Komponenten (Hardware) durch Firmware (ASIC) implementiert sein oder durch Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul sowie ein oder mehreren Sensoren, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne vom beschriebenen erfindungsgemäßen Verfahren abzuweichen. Die bevorzugten Durchführungsformen des erfindungsgemäßen Verfahrens korrespondieren zu den bevorzugten Ausführungsformen des erfindungsgemäßen lonenmobilitätsspektrometers.

### BESCHREIBUNG DER FIGUREN

Nachfolgend werden Ausführungsbeispiele der vorliegenden Erfindung anhand der beigefügten Zeichnungen erläutert. Dabei zeigen:
- Figur 1: eine schematische seitliche Schnittdarstellung eines lonenmobilitätsspektrometers gemäß einer Ausführungsform;
- Figur 2: eine schematische perspektivische Schnittdarstellung von einen Reaktionsraum und von Teilen eines Driftraums eines lonenmobilitätsspektrometers gemäß einer Ausführungsform;
- Figur 3: eine schematische perspektivische Darstellung eines Einströmrings gemäß einer Ausführungsform;
- Figur 4: eine schematische Darstellung (A) einer Probengasströmung, (B) einer Driftgasströmung und (C) einer Gesamtströmung aus Probengasströmung und Driftgasströmung in einem lonenmobilitätsspektrometer gemäß einer Ausführungsform;
- Figur 5: eine schematische Querschnittsdarstellung der Strömungsgeschwindigkeit der Gesamtströmung um die lokale Ionisierungsquelle am Gasauslass eines Ionenmobilitätsspektrometers gemäß einer Ausführungsform; und
- Figur 6: ein IMS-Spektrum negativ geladener Ionen (A) ohne und (B) mit Anwesenheit von kontaminierenden NO_{X}-Ionen im Driftraum

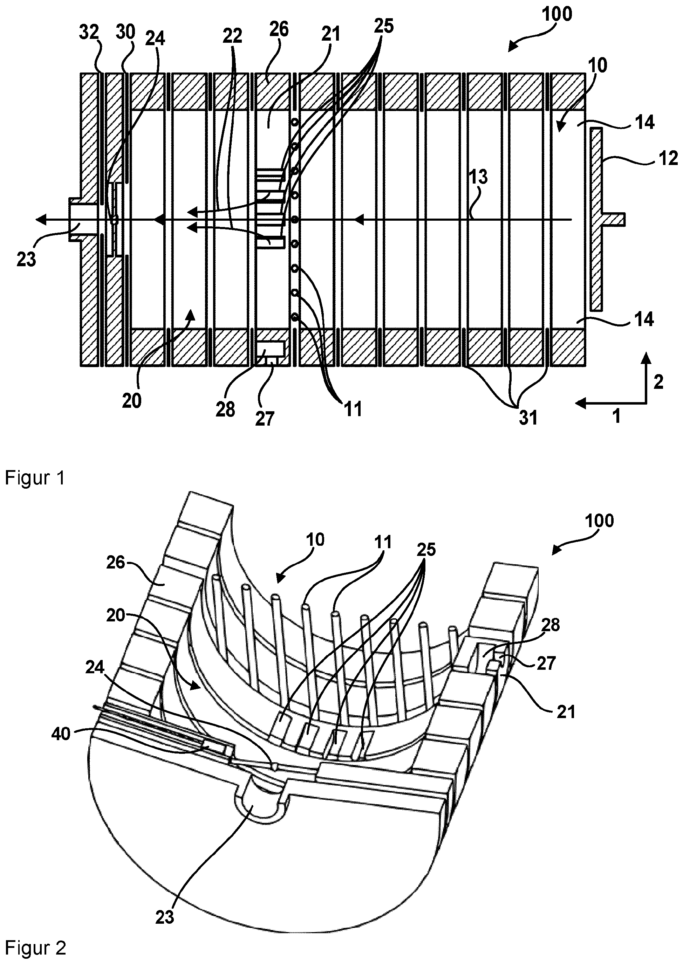

Ein lonenmobilitätsspektrometer 100 gemäß einer Ausführungsform der vorliegenden Offenbarung ist in Figur 1 in einer schematischen Seitendarstellung und in Figur 2 in einer schematischen, perspektivischen Schnittdarstellung gezeigt. Das lonenmobilitätsspektrometer 100 weist dabei einen zylindrischen Driftraum 10 und einen darin in axialer Richtung 1 angrenzenden zylindrischen Reaktionsraum 20 auf. Der Driftraum 10 wird dabei auf einer dem Reaktionsraum 20 zugewandten Seite von einem Schaltgitter 11 begrenzt. Auf einer dem Schaltgitter 11 gegenüberliegenden Seite wird der Driftraum 10 von einem Ionendetektor 12 begrenzt und wird der Reaktionsraum 20 von einem Gasauslass 23 begrenzt. Ein Driftgaseinlass 14 ist ringförmig um den Ionendetektor 12 herum angeordnet. Ein Probengaseinlass 21 ist im Reaktionsraum 20 benachbart zum Schaltgitter 11 angeordnet und weist paarweise gegenüberliegend an einem Innenumfang des Reaktionsraums 20 angeordnete Gaseinlässe 25 auf. In dem Reaktionsraum 20 ist ferner eine zur dielektrischen Barriereentladung konfigurierte lokale lonisierungsquelle 24 nahe des Gasauslasses 23 angeordnet.

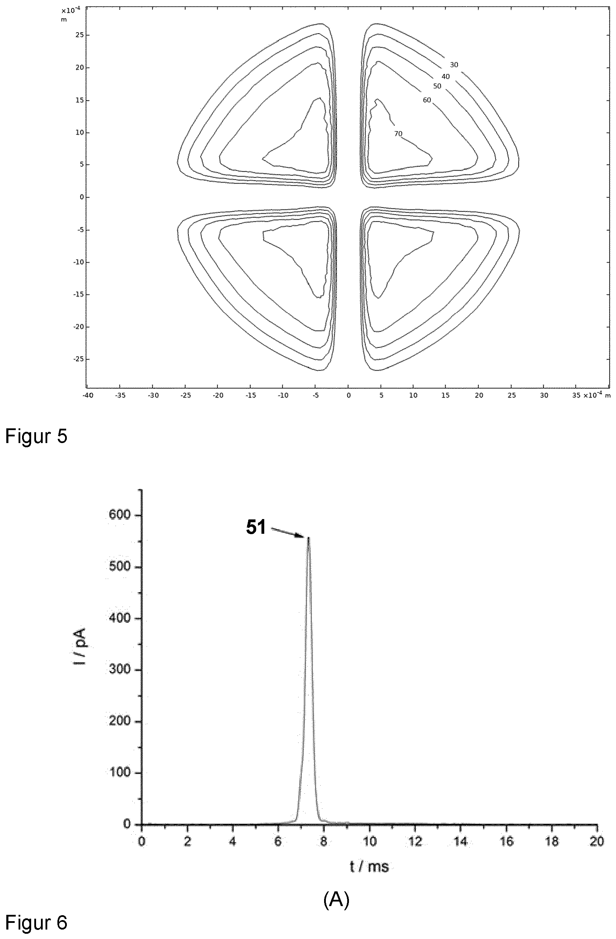

Im Betrieb des lonenmobilitätsspektrometer 100 wird ein Driftgas 13, insbesondere trockene Luft mit einem Wassergehalt von weniger als 100 ppm, mittels einer Driftgaszuführung (nicht dargestellt) durch den Driftgaseinlass 14 mit einer definierten Strömungsgeschwindigkeit, beispielsweise 4 cm/s, in den Driftraum 10 eingeleitet. Das Driftgas 13 durchströmt den Driftraum 10, das Schaltgitter 11 und den Reaktionsraum 20 und verlässt das lonenmobilitätsspektrometer 100 durch den Gasauslass 23. Ferner kann im Betrieb des lonenmobilitätsspektrometers 100 ein Probengas 22, bestehend aus in einem Trägergas enthaltenes Probenmaterial, durch einen Probengaseinlass 21 in den Reaktionsraum 20 eingeleitet werden. Das Probengas 22 vermischt sich mit dem Driftgasstrom 13 in axialer Richtung stromabwärts von dem Probengaseinlass 21 und der Gesamtgasstrom aus Probengasstrom 22 und Driftgasstrom 22 strömt in Richtung des Gasauslass 23, wobei der Gesamtgasstrom aufgrund des geringeren Strömungsquerschnitts des Gasauslasses 23 erhöht wird. Bevor der erhöhte Gesamtgasstrom das lonenmobilitätsspektrometer 100 durch den Gasauslass 23 verlässt, umströmt dieser eine lokale Ionisierungsquelle 24, wobei je nach Fördermenge des Driftgases 13 Strömungsgeschwindigkeiten von über 50 cm/s erreicht werden. Ein Strömungsprofil im Querschnitt des lonenmobilitätsspektrometers 100 um die lokale Ionisierungsquelle 24 ist in Figur 5 dargestellt. Die Konturlinien geben dabei eine Strömungsgeschwindigkeit des Gases in cm/s an. Demnach werden im Bereich der lokalen Ionisierungsquelle 24 Strömungsgeschwindigkeiten des Gesamtgasstroms von etwa 70 cm/s erreicht.

An der lokalen Ionisierungsquelle 24 wird das Probenmaterial durch eine dielektrische Barriereentladung ionisiert. Zudem kann es zu einer Ionisierung von Bestandteilen der als Driftgas 13 genutzten Luft kommen. In der Nachbarschaft der lokalen Ionisierungsquelle 24 ist eine LED als Strahlungsquelle 40 angeordnet, mittels der die lokale Ionisierungsquelle 24 direkt beleuchtet werden kann. Im eingeschalteten Zustand kann mit LED 40 das Zünden des Plasmas bei trockenen Umgebungsbedingungen sichergestellt werden, insbesondere wenn sowohl das Driftgas als auch das Trägergas bzw. das Probengas trocken sind, beispielsweise mit einer Wasserkonzentration des Gesamtstroms von weniger als 100 ppm.

Der Reaktionsraum 20 weist ferner eine lokale Potentialquelle 30 auf, mittels der eine elektrische Spannung gegenüber einer Referenzquelle 32 (Masse) aufgebaut werden kann. In Abhängigkeit der so erzeugten Potentialdifferenz zwischen Ionisierungsquelle 24 und Potentialquelle 30 werden Ionen einer bestimmten Polarität in Richtung des Schaltgitters 11 und entgegen dem Gesamtgasstrom bewegt. Die Bewegung wird ferner durch weitere Potentialstützringe (Feldstützringe) 31 vermittelt, welche sowohl in dem Reaktionsraum 20 als auch im Driftraum 10 angeordnet sind. Dabei werden vor allem Ionen mit einem Verhältnis von Ionengeschwindigkeit und Strömungsgeschwindigkeit größer Eins entgegen den Gesamtgasstrom zum Schaltgitter 11 hinbewegt, während andere durch die hohe Strömungsgeschwindigkeit des Gesamtgasstroms zu dem Gasauslass 23 und durch diesem aus dem lonenmobilitätsspektrometer 100 geleitet werden. Das Schaltgitter 11 erreichende Ionen werden im Driftraum durch die darin angeordneten Potentialstützringe 31 auf definierte Art und Weise gegen den Driftgasstrom 13 in Richtung des lonendetektors 12 bewegt. Anhand der gemessenen Driftzeiten, welche die Ionen für die Strecke vom Schaltgitter 11 zu dem Ionendetektor 12 benötigen, lässt sich die lonenmobilität der Ionen bestimmen. Es hat sich gezeigt, dass der Aufbau des lonenmobilitätsspektrometers 100 gemäß der vorliegenden Offenbarung vorteilhaft eine Trennung von ionisiertem Probenmaterial und durch die Ionisationsquelle gebildeten neutralen Teilchen ermöglicht. Somit kann mit dem lonenmobilitätsspektrometer 100 der vorliegenden Offenbarung ein lonenmobilitätsspektrum ermittelt werden, dass weitgehend frei von störenden Peaks, beispielsweise von NO_{X}-Ionen, ist.

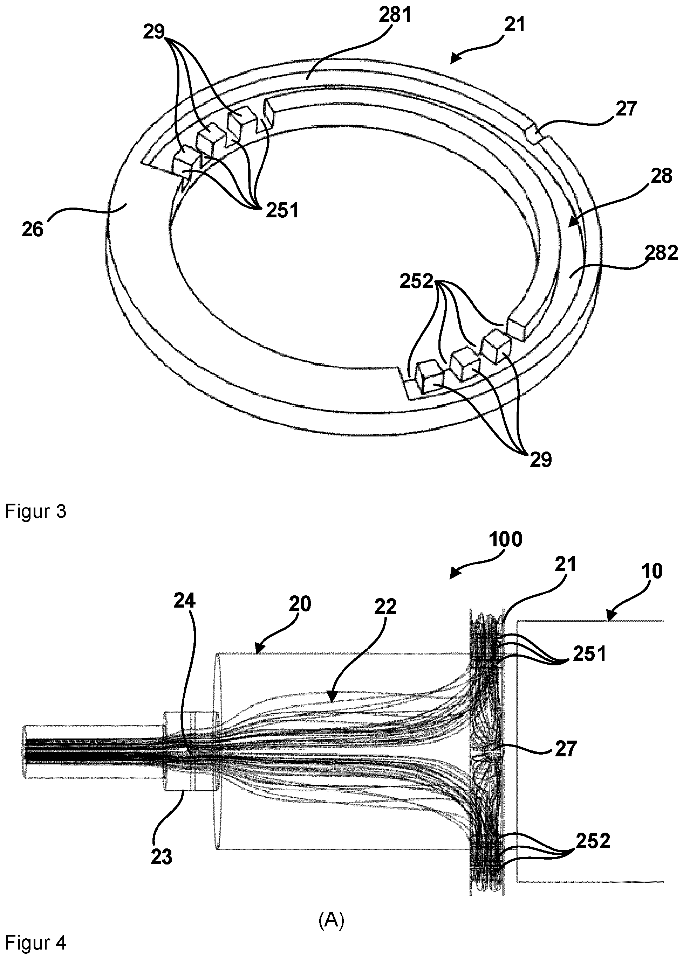

Gemäß einer Ausführungsform weist der Probengaseinlass 26 einen Einströmring 21 auf, wie in der perspektivischen Darstellung der Figur 3 schematisch gezeigt. Der Einströmring 21 weist dabei eine Probengaszuleitung 27 auf, die zum Anschluss an eine externe Probengaszuführung (mit Pumpen und/oder Ventilen, nicht dargestellt) ausgebildet ist. Die Probengaszuleitung 27 ist gemäß Figur 3 als eine Bohrung durch einen Außenumfang des Einströmrings 21 ausgebildet. Ferner weist der Einströmring 21 einen Strömungskanal 28 auf, der gemäß der Figur 3 als auf eine axiale Oberfläche des Einströmrings 21 eingebrachte und mit der Probengaszuleitung 27 verbundene Vertiefung ausgebildet ist. Eine Abdichtung des Strömungskanals 28 erfolgt dann durch Einbau des Einströmrings 21 in das lonenmobilitätsspektrometer 100 unter Verwendung geeigneter Klebstoffe, Lötungen oder Elastomer-Dichtungen zwischen dem Einströmring 26 und benachbarten ringförmigen Segmenten des lonenmobilitätsspektrometers 100.

Der in Figur 3 gezeigte Einströmring weist insbesondere einen in eine erste Richtung von der Probengaszuleitung 27 abzweigenden ersten Strömungskanal 281 und einen in eine zweite Richtung von der Probengaszuleitung 27 abzweigenden zweiten Strömungskanal 282 auf. Der erste Strömungskanal 281 verbindet dabei die Probengaszuleitung 27 mit einer Vielzahl erster Gaseinlässe 251 zum Einleiten des Probengases 22 mit radialen Strömungsanteilen, das heißt zumindest teilweise in radiale Richtung 2 (vgl. Figur 1). Die Gaseinlässe 251 können dabei senkrecht zu der axialen Richtung 1 ausgerichtet sein und direkt auf eine Rotationssymmetrieachse des lonenmobilitätsspektrometers 100 weisen. Die Gaseinlässe 251 können jedoch auch einen leicht spitzen Winkel mit der axialen Richtung 1 einschließen, so dass der Probengasstrom 22 mit einer axialen Geschwindigkeitskomponente in Richtung der Ionisierungsquelle 24 sowie mit radialen Geschwindigkeitskomponenten eingeleitet wird. Der zweite Strömungskanal 282 verbindet die Probengaszuleitung 27 ferner mit einer Vielzahl zweiter Gaseinlässe 252 zum Einleiten des Probengases 22. Dabei sind die ersten Gaseinlässe 251 und die zweiten Gaseinlässe 252 paarweise gegenüberliegend angeordnet. Insbesondere sind die ersten Gaseinlässe 251 und die zweiten Gaseinlässe 252 punktsymmetrisch zueinander mit Bezug auf die in axiale Richtung 1 weisende Rotationssymmetrieachse des lonenmobilitätsspektrometers 100 angeordnet. Dies ermöglicht vorteilhaft, dass sich eine radiale Geschwindigkeitskomponente des durch einen ersten Gaseinlass 251 eingeleiteten Probengasstroms 22 und eine radiale Geschwindigkeitskomponente des durch einen gegenüberliegenden zweiten Gaseinlasses 252 eingeleiteten Probengasstroms 22 gegenseitig kompensieren. Vorteilhaft wird dadurch die radiale Strömungsgeschwindigkeit des Probengasstroms 22 im Bereich der Rotationssymmetrieachse nahezu null, so dass der Probengasstrom 22 nicht zu der gegenüberliegenden Wandung des Reaktionsraums 20 strömt. Dies bewirkt eine vorteilhafte Probenzuführung an die lokale Ionisierungsquelle 24, insbesondere in einen begrenzten Raumbereich um die lokale Ionisierungsquelle 24. Das lonenmobilitätsspektrometer 100 der vorliegenden Offenbarung ermöglicht somit eine hohe Ausbeute von an der lokalen Ionisierungsquelle 24 erzeugten Ionen des Probenmaterials.

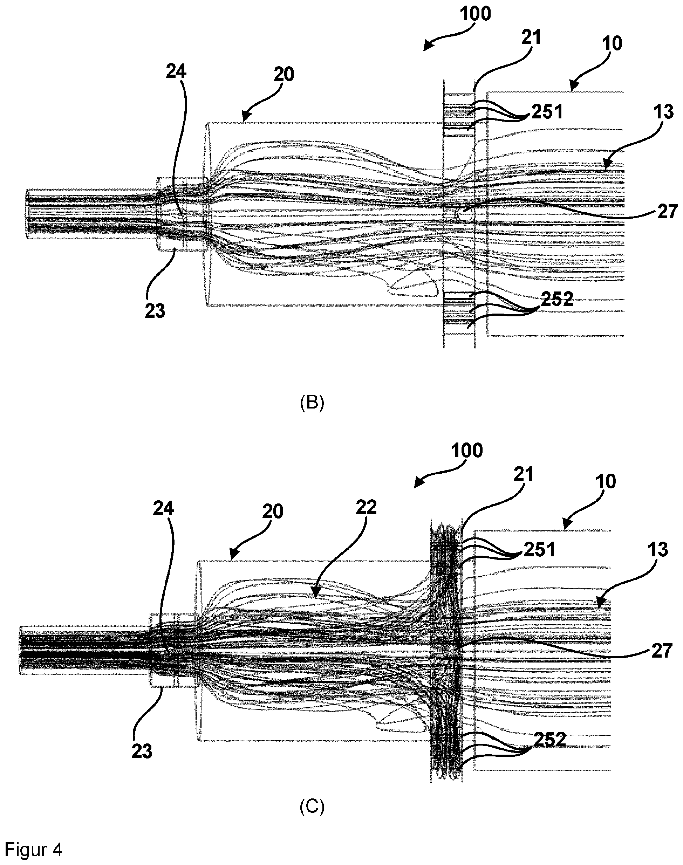

In den Figuren 4(A), (B) und (C) sind schematisch der Probengasstrom 22, der Driftgasstrom 13 und der Gesamtgasstrom 13, 22 in dem lonenmobilitätsspektrometer 100 dargestellt. Wie in Figur 4(A) gezeigt, wird das Probengas 22 zunächst durch die Probengaszuleitung 27 in den Einströmring 26, insbesondere in innenliegend darin angeordneten Strömungskanäle (nicht dargestellt), eingeleitet. Über die Strömungskanäle erreicht das Probengas 22 erste Gaseinlässe 251 und gegenüberliegend angeordnete zweite Gaseinlässe 252 und wird durch diese in den Reaktionsraum 20 eingeleitet. Durch das Einleiten über gegenüberliegende Einlässe 251, 252 kompensieren sich die radialen Strömungskomponenten des Probengases 22 effektiv. Durch eine Überlagerung mit dem in Figur 4(A) nicht gezeigten Driftgasstrom wird das Probengas 22 zudem in Richtung der lokalen Ionisierungsquelle 24 verlagert und stromabwärts durch den Gasauslass 23 erhöht und abgeführt.

Figur 4(B) zeigt den Driftgasstrom 13 im lonenmobilitätsspektrometer 100 in isolierter Darstellung. Der Driftgasstrom 13 wird durch den Gaseinlass (nicht dargestellt) in den Driftraum 10 eingeleitet und strömt darin weitgehend laminar in Richtung Reaktionsraum. Nach dem Übergang in den Reaktionsraum 20 erfährt der Driftgasstrom 10 im Bereich des Probengaseinlass 21 eine lokale Einschnürung aufgrund der mit radialen Strömungskomponenten eingeleiteten Probengases 22. Danach strömt der Driftgasstrom 13 weiter in Richtung Gasauslass 23, in dem die lokale Ionisierungsquelle 24 angeordnet ist. Aufgrund des deutlich geringeren Strömungsquerschnitts des Gasauslasses 23 im Vergleich zu dem Strömungsquerschnitt des Reaktionsraums 20 wird der Driftgasstrom im Gasauslass 23 und um die lokale Ionisierungsquelle 24 stark erhöht. Die Erhöhung ergibt sich dabei nach BERNOULLI aus dem Verhältnis der Strömungsquerschnitte von Reaktionsraum 20 und Gasauslass 23 und bevorzugt ist der Strömungsquerschnitt des Reaktionsraums 20 um zumindest einen Faktor 2, bevorzugt einen Faktor 5 und besonders bevorzugt einen Faktor 10 größer als der Strömungsquerschnitt des Gasauslasses 23. Figur 4(C) zeigt den aus dem Probengasstrom 22 der Figur 4(A) und dem Driftgasstrom 13 der Figur 4(B) gebildeten Gesamtgasstrom. Auch dieser weist die für das lonenmobilitätsspektrometer 100 der vorliegenden Offenbarung charakteristischen Strömungsmuster auf, insbesondere das Fehlen radial über eine Symmetrieachse des Ionenmobilitätsspektrometers 100 überschießender Anteile des Probengasstroms 22 sowie die Erhöhung des Gesamtgasstroms durch die Ableitung durch den Gasauslass 23 um die lokale Ionisierungsquelle 24. Mit dem lonenmobilitätsspektrometer 100 gemäß der vorliegenden Offenbarung wird somit eine hohe Ausbeute von Ionen des Probenmaterials an der Quelle 24 erzielt. Ebenso wird ein effektiver Transport des ionisierten Probenmaterials in den Driftraum 10 erzielt, wo hingegen nicht ionisierte Bestandteile der als Driftgas genutzten Luft durch den Gasauslass 23 aus dem lonenmobilitätsspektrometer 100 abgeleitet werden. Durch das Einströmen des Probengases mittels des Probengaseinlasses 21 wird zudem ein Eintreten von nicht-ionisiertem Probengas, insbesondere von Wasser, in den Driftraum 10 effektiv unterbunden.

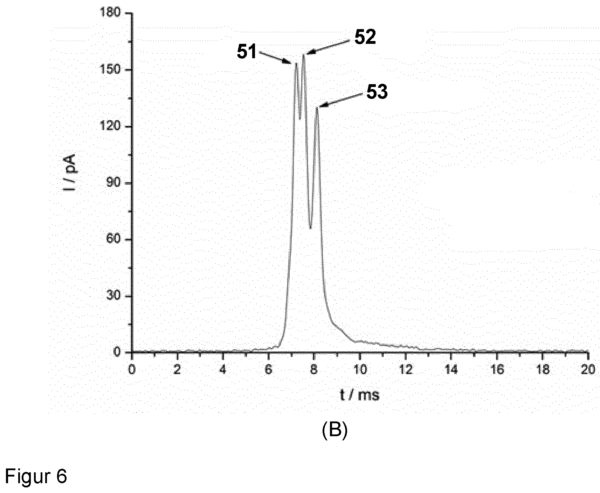

Das lonenmobilitätsspektrometer 100 der vorliegenden Offenbarung kann ferner vorteilhaft in zwei verschiedenen Betriebsmodi betrieben werden. Dabei ermöglicht ein erster Betriebsmodus vorteilhaft eine Kalibration des lonenmobilitätsspektrometers 100 anhand intern erzeugter NO_{X}-Ionen und ein zweiter Betriebsmodul das referenz-basierte Ermitteln eines Ionenmobilitätsspektrums für das Probenmaterial unter Verwendung einer vorbekannten temperaturabhängigen normierten lonenmobilität für die NO_{X}-Ionen. Figur 6(A) und (B) zeigen mit dem erfindungsgemäßen lonenmobilitätsspektrometer 100 ermittelte Driftzeitspektren mit (Fig. 6(A)) und ohne (Fig. 6(B)) Kontamination des Probengases mit NO_{X}-Ionen. Anhand dieser Figuren werden nachfolgende die zwei Betriebsmodi des IMS 100 kurz erläutert.

In dem ersten Betriebsmodus des lonenmobilitätsspektrometers 100 gemäß der vorliegenden Offenbarung wird dieses mit ersten Betriebsparametern betrieben. Diese bewirken, dass an der lokalen Ionisierungsquelle 24 ausschließlich oder zumindest überwiegend NO_{X}-Ionen gebildet werden, beispielsweise NO₂-Ionen und/oder NO₃-Ionen. Hierzu wird insbesondere eine Probengaszuführung gestoppt oder gedrosselt, wobei eine Trägergaszuführung ebenfalls gestoppt werden oder weiterbetrieben werden kann. Letztere Option ist insbesondere bei der Verwendung des Driftgases, beispielsweise trockener Luft, als Trägergas sinnvoll. Zudem können die Probengaszuführung und/oder die Driftgaszuführung zum Einleiten des Driftgases durch den Driftgaseinlass 14 derart betrieben werden, dass eine Strömungsgeschwindigkeit des Gesamtgasstroms an der lokalen Ionisierungsquelle 24 weniger als 50 cm/s beträgt. Zudem kann eine Betriebsspannung der lokalen Ionisierungsquelle oberhalb einer vorbestimmten Grenzspannung eingestellt werden, die bevorzugt empirisch für das lonenmobilitätsspektrometer 100 in einem Teststand bestimmt wurde und oberhalb derer NO_{X}-Ionen aus dem Driftgas gebildet werden, insbesondere mit einer vorbestimmten Ausbeute. Durch Einstellen der ersten Betriebsparameter werden an und um die lokale Ionisierungsquelle 24 mithin vorrangig NO_{X}-Ionen gebildet, wohingegen eine Bildung von ionisiertem Probenmaterial nahezu nicht erfolgt.

In Figur 6(B) sind zwei charakteristische Peaks 52, 53 für NO_{X}-Ionen in einem lonenmobilitätsspektrum dargestellt. Dabei entspricht der zweite IMS-Peak 52 einem Wert einer normierten lonenmobilität K₀⁵² von 2,18 cm²/Vs und der dritte IMS-Peak 53 einem Wert einer normierten lonenmobilität K₀⁵³ von 2,00 cm²/Vs. Ebenfalls dargestellt ist ein erster IMS-Peak 51 eines beispielhaften ionisierten Probenmaterials mit einer lonenmobilität K₀⁵¹ von 2,126 cm²/Vs. Beispielhaft ist dies der Peak eines Primär-Ions bzw. des negativen Reaktant-Ions. Wie anhand von Figur 6(B) ersichtlich, ist eine Auflösung des ersten IMS-Peaks 51 durch die IMS-Peaks 52, 53 der NO_{X}-Ionen deutlich erschwert. Somit sollte eine Messung des IMS-Peaks 51 möglichst ohne die Anwesenheit von NO_{X}-Ionen erfolgen. Gleichzeitig können die IMS-Peaks 52, 53 der NO_{X}-Ionen durch Vergleich mit vorbekannten Werten einer normierten lonenmobilität K₀(T) der NO_{X}-Ionen für eine referenzbasierte Messung der lonenmobilität des Probenmaterials genutzt werden. Besonders der IMS-Peak 53 ist hierfür wegen seiner separierten Position geeignet. Hierfür werden in dem ersten Betriebsmodus allein die IMS-Peaks 52, 53 der NO_{X}-Ionen und mithin deren Driftzeiten unter den aktuellen Messbedingungen des lonenmobilitätsspektrometer 100, beispielsweise der aktuellen Temperatur, ermittelt. Zusammen mit dem aufgelöst ermittelten IMS-Peak 51, sprich der Driftzeit, des Probenmaterials kann dessen Ionenmobilität anhand des Driftzeitverhältnisses von Probenmaterial und NO_{X}-Ionen bestimmt werden.

In dem zweiten Betriebsmodus des lonenmobilitätsspektrometers 100 werden daher zweite Betriebsparameter eingestellt, die eine Fördermenge der Probengaszuführung ungleich null einstellen und ferner eine Fördermenge der Driftgaszuführung so erhöhen, dass Strömungsgeschwindigkeit des Gesamtgasstroms an der lokalen Ionisierungsquelle 50 cm/s und mehr beträgt. Ein entsprechendes Strömungsprofil des Gesamtgasstroms im zweiten Betriebsmodus ist im Querschnitt des lonenmobilitätsspektrometers 100 um die lokale Ionisierungsquelle 24 herum in Figur 5 dargestellt, wobei im Bereich der lokalen Ionisierungsquelle 24 Strömungsgeschwindigkeiten des Gesamtgasstroms von etwa 70 cm/s erreicht werden. Somit werden NO_{X}-Verbindungen vorteilhaft über den Gasauslass 23 abgeleitet. Gleichzeitig wird eine Versorgungsspannung der dielektrisch behinderten Entladungsquelle als lokale Ionisierungsquelle 24 unter die vorbestimmte Grenzspannung eingestellt, so dass deutlich weniger NO_{X}-Ionen an der lokalen Ionisierungsquelle 24 gebildet werden. In dem zweiten Betriebsmodus treten somit vorteilhaft nahezu keine NO_{X}-Ionen in den Driftraum 10 ein und es wird folglich das Driftzeitspektrum der Figur 6(A) ermittelt. Zusammen mit den im ersten Betriebsmodus ermittelten Driftzeiten der NO_{X}-Ionen in einem Driftzeitspektrum ähnlich dem der Figur 6(B), wird anschließend die lonenmobilität des Probenmaterials anhand des Driftzeitverhältnisses von Probenmaterial und NO_{X}-Ionen sowie einer vorbekannten lonenmobilität K₀(T) der NO_{X}-Ionen bestimmt. Bevorzugt erfolgt zwischen dem ersten und zweiten Betriebsmodus ein Spülen des lonenmobilitätsspektrometers 100, um die gebildeten NO_{X}-Ionen möglichst vollständig auszuleiten.

### BEZUGSZEICHEN

- 1: axiale Richtung
- 2: radiale Richtung

- 10: Driftraum
- 11: Schaltgitter
- 12: Ionendetektor
- 13: Driftgasströmung
- 14: Driftgaseinlass

- 20: Reaktionsraum
- 21: Probengaseinlass
- 22: Probengas
- 23: Gasauslass
- 24: lokale Ionisierungsquelle
- 25: Gaseinlässe
- 251: erste Gaseinlässe
- 252: zweite Gaseinlässe
- 26: Einströmring
- 27: Probengaszuleitung
- 28: Strömungskanal
- 281: erster Strömungskanal
- 282: zweiter Strömungskanal
- 29: Strömungshindernis

- 30: Potentialquelle
- 31: Feldstützring
- 32: Bezugspotential
- 40: Strahlungsquelle (LED)
- 51: erster IMS Peak
- 52: zweiter IMS Peak
- 53: dritter IMS Peak

- 100: lonenmobilitätsspektrometer

## Patentansprüche

1. lonenmobilitätsspektrometer (100) zum Ermitteln einer lonenmobilität einer Probe, aufweisend:
einen zum Transport von Ionen von einem Schaltgitter (11) zu einem Ionendetektor (12) entgegen einer axialen Driftgasströmung (13) ausgebildeten zylindrischen Driftraum (10),
einen an den Driftraum in axialer Richtung (1) angrenzenden zylindrischen Reaktionsraum (20) mit einem zu dem Schaltgitter (11) benachbarten Probengaseinlass (21) zum Einleiten eines Probengases (22), einem dem Schaltgitter (11) gegenüberliegenden und mit Bezug zur axialen Richtung konzentrisch zu dem Reaktionsraum und dem Driftraum angeordneten Gasauslass (23) zum Ableiten von Driftgas (13) und von Probengas (22) zu einem unidirektionalen Gasstrom und einer am Gasauslass (23) angeordneten lokalen Ionisierungsquelle (24),
wobei der Probengaseinlass (21) gegenüberliegende und an einem Innenumfang des Reaktionsraums (20) angeordnete Gaseinlässe (25) aufweist.

2. lonenmobilitätsspektrometer (100) nach Anspruch 1, wobei der Driftraum (10) und der Reaktionsraum (20) kreiszylinderförmig ausgebildet sind und die Zuführung des Probengases (22) durch die Gaseinlässe (25) mit radialen Strömungskomponenten erfolgt.

3. lonenmobilitätsspektrometer (100) nach Anspruch 2, wobei sich radiale Komponenten der Strömungsgeschwindigkeiten von durch gegenüberliegende Gaseinlässe (25) geleiteten Teilströmen des Probengases (22) gegenseitig kompensieren.

4. lonenmobilitätsspektrometer (100) nach einem der vorangehenden Ansprüche, wobei der Probengaseinlass (21) einen umfänglich um den Reaktionsraum (20) verlaufenden Einströmring (26) mit zumindest einem eine Probengaszuleitung (27) und zumindest einen Gaseinlass (25) verbindenden Strömungskanal (28) aufweist.

5. lonenmobilitätsspektrometer (100) nach Anspruch 4, wobei der Probengaseinlass (21) paarweise gegenüberliegende und an dem Innenumfang des Reaktionsraums (20) angeordnete Gaseinlässe (25) aufweist, wobei jedes Paar gegenüberliegender Gaseinlässe (25) einen ersten Gaseinlass (251) und einen zweiten Gaseinlass (252) aufweist und die Probengaszuleitung (27) über einen ersten Strömungskanal (281) mit zumindest einem ersten Gaseinlass (251) und über einen zweiten Strömungskanal (282) mit zumindest einem zweiten Gaseinlass (252) verbunden ist.

6. lonenmobilitätsspektrometer (100) nach Anspruch 4 oder 5, wobei in zumindest einem Strömungskanal (28) Strömungshindernisse (29) zum Umlenken eines Probengasstroms (22) durch die Gaseinlässe (25) angeordnet sind.

7. lonenmobilitätsspektrometer (100) nach einem der Ansprüche 4 bis 6, wobei zumindest ein Strömungskanal (281, 282) eine Mehrzahl von Gaseinlässen (251, 252) aufweist.

8. lonenmobilitätsspektrometer (100) nach Anspruch 7, wobei jeweils ein Strömungshindernis (29) zum Umlenken eines Probengasstroms (22) zwischen zwei Gaseinlässen (25) angeordnet ist.

9. lonenmobilitätsspektrometer (100) nach Anspruch 8, wobei die Strömungshindernisse (29) dazu ausgebildet sind, durch die Gaseinlässe (25) austretenden Teilströme des Probengases zu nivellieren.

10. lonenmobilitätsspektrometer (100) nach einem der vorangehenden Ansprüche, wobei der Gasauslass (23) einen geringeren Strömungsquerschnitt aufweist als der Reaktionsraum (20) und/oder der Driftraum (10).

11. lonenmobilitätsspektrometer (100) nach einem der vorangehenden Ansprüche, wobei die lokale Ionisierungsquelle (24) für eine dielektrische Barriereentladung konfiguriert ist und/oder aufweisend eine Strahlungsquelle (40) zum Bestrahlen der lokalen Ionisierungsquelle (24) mit Licht einer Wellenlänge von 280 nm bis 480 nm.

12. lonenmobilitätsspektrometer (100) nach einem der vorangehenden Ansprüche, ferner aufweisend zumindest eine im Reaktionsraum (20) angeordnete Potentialquelle (30) zum Erzeugen eines elektrischen Felds zum Abtransport von an der lokalen Ionisierungsquelle (24) gebildeten Ionen in Richtung des Driftraums (10).

13. lonenmobilitätsspektrometer (100) nach einem der vorangehenden Ansprüche, ferner aufweisend einen im Bereich des Ionendetektors (12) angeordneten Driftgaseinlass (13) und eine Driftgaszuführung zum steuer- oder regelbaren Zuleiten von Driftgas und eine Probengaszuführung zum steuer- oder regelbaren Zuleiten von Probengas.

14. Verfahren zum Betrieb eines lonenmobilitätsspektrometers (100) nach Anspruch 1 zum Ermitteln einer lonenmobilität einer Probe, aufweisend die Verfahrensschritte:
Einstellen von ersten Betriebsparametern einer lokalen Ionisierungsquelle (24), einer Driftgaszuführung zum Zuführen von Luft als Driftgas und/oder einer Probengaszuführung des lonenmobilitätsspektrometers zum Erzeugen von NO_{X}-Ionen an der lokalen Ionisierungsquelle (24) und zum Eintragen der erzeugten NO_{X}-Ionen in einen Driftraum (10) des lonenmobilitätsspektrometers (100);
Messen einer ersten Driftzeit t_{NOX} der NO_{X}-Ionen bei der Driftraumtemperatur T;
Einstellen von zweiten Betriebsparametern der lokalen Ionisierungsquelle (100), der Driftgaszuführung und/oder der Probengaszuführung zum Erzeugen von Proben-Ionen ohne Bildung von NO_{X}-Ionen an der lokalen Ionisierungsquelle (24) und/oder zum Vermeiden des Eintrags von NO_{X}-Ionen in den Driftraum (10), wobei die zweiten Betriebsparameter eine Fördermenge der Probengaszuführung ungleich null einstellen und eine Fördermenge der Driftgaszuführung so erhöhen, dass NO_{X}-Verbindungen über den Gasauslass (23) abgeleitet werden;
Messen einer zweiten Driftzeit t_{P} der Proben-Ionen bei der Driftraumtemperatur T;
Ermitteln einer normierten lonenmobilität der Probe K₀^{P}(T) anhand der gemessenen ersten Driftzeit t_{NOX}, der gemessenen zweiten Driftzeit t_{P} und einer normierten Ionenmobilität der NO_{X}-Ionen K₀^{R}(T) als Referenz gemäß K₀^{P}(T)=t_{NOX}/t_{P}* K₀^{R}(T).

15. Verfahren nach Anspruch 14, wobei die ersten Betriebsparameter eine Fördermenge der Probengaszuführung und/oder eine Fördermenge der Driftgaszuführung zum Begrenzen einer Strömungsgeschwindigkeit an der lokalen Ionisierungsquelle auf unter 50 cm/s einstellen und/oder eine Versorgungsspannung einer dielektrisch behinderten Entladungsquelle als lokale Ionisierungsquelle (24) über eine vorbestimmte Grenzspannung einstellen und wobei die zweiten Betriebsparameter eine Fördermenge der Probengaszuführung und/oder eine Fördermenge der Driftgaszuführung zum Einstellen einer Strömungsgeschwindigkeit an der lokalen Ionisierungsquelle (24) von über 50 cm/s einstellen und/oder eine Versorgungsspannung einer dielektrisch behinderten Entladungsquelle als lokale Ionisierungsquelle (24) unter eine vorbestimmte Grenzspannung einstellen.

## Claims

1. An ion mobility spectrometer (100) for determining an ion mobility of a sample, comprising:
a cylindrical drift space (10) configured for the transport of ions from a switching grid (11) to an ion detector (12) against an axial drift gas flow (13),
a cylindrical reaction space (20) adjacent to the drift space in an axial direction (1) with a sample gas inlet (21) adjacent to the switching grid (11) for introducing a sample gas (22), a gas outlet (23) opposite the switching grid (11) and arranged concentrically to the reaction space and the drift space with respect to the axial direction for discharging drift gas (13) and sample gas (22) to a unidirectional gas stream, and a local ionization source (24) arranged at the gas outlet (23),
wherein the sample gas inlet (21) comprises gas inlets (25) opposite to one another and arranged on an inner circumference of the reaction space (20).

2. The ion mobility spectrometer (100) according to claim 1, wherein the drift space (10) and the reaction space (20) are configured to be circular cylindrical and supplying the sample gas (22) through the gas inlets (25) is performed with radial flow components.

3. The ion mobility spectrometer (100) according to claim 2, wherein radial components of the flow velocities of partial streams of the sample gas (22) guided through opposite gas inlets (25) mutually compensate each other.

4. The ion mobility spectrometer (100) according to any one of the preceding claims, wherein the sample gas inlet (21) comprises an inflow ring (26) extending circumferentially around the reaction space (20) with at least one flow channel (28) connecting a sample gas supply line (27) and at least one gas inlet (25).

5. The ion mobility spectrometer (100) according to claim 4, wherein the sample gas inlet (21) comprises gas inlets (25) opposite to one another in pairs and arranged on the inner circumference of the reaction space (20), wherein each pair of opposite gas inlets (25) comprises a first gas inlet (251) and a second gas inlet (252), and the sample gas supply line (27) is connected via a first flow channel (281) to at least one first gas inlet (251) and via a second flow channel (282) to at least one second gas inlet (252).

6. The ion mobility spectrometer (100) according to claim 4 or 5, wherein flow obstacles (29) for deflecting a sample gas stream (22) through the gas inlets (25) are arranged in at least one flow channel (28).

7. The ion mobility spectrometer (100) according to any one of claims 4 to 6, wherein at least one flow channel (281, 282) comprises a plurality of gas inlets (251, 252).

8. The ion mobility spectrometer (100) according to claim 7, wherein a flow obstacle (29) for deflecting a sample gas stream (22) is respectively arranged between two gas inlets (25).

9. The ion mobility spectrometer (100) according to claim 8, wherein the flow obstacles (29) are configured to equalize exiting partial streams of the sample gas through the gas inlets (25).

10. The ion mobility spectrometer (100) according to any one of the preceding claims, wherein the gas outlet (23) comprises a smaller flow cross-section than the reaction space (20) and/or the drift space (10).

11. The ion mobility spectrometer (100) according to any one of the preceding claims, wherein the local ionization source (24) is configured for a dielectric barrier discharge and/or comprising a radiation source (40) for irradiating the local ionization source (24) with light of a wavelength of 280 nm to 480 nm.

12. The ion mobility spectrometer (100) according to any one of the preceding claims, further comprising at least one potential source (30) arranged in the reaction space (20) for generating an electric field for removal of ions formed at the local ionization source (24) in the direction of the drift space (10).

13. The ion mobility spectrometer (100) according to any one of the preceding claims, further comprising a drift gas inlet (13) arranged in the area of the ion detector (12) and a drift gas supply for controllable or regulable supplying of drift gas and a sample gas supply for controllable or regulable supplying of sample gas.

14. A method for operating an ion mobility spectrometer (100) according to claim 1 for determining an ion mobility of a sample, comprising the method steps:
setting first operating parameters of a local ionization source (24), of a drift gas supply for supplying air as drift gas and/or of a sample gas supply of the ion mobility spectrometer for generating NO_{X} ions at the local ionization source (24) and for introducing the generated NO_{X} ions into a drift space (10) of the ion mobility spectrometer (100);
measuring a first drift time t_{NOX} of the NO_{X} ions at the drift space temperature T;
setting second operating parameters of the local ionization source (100), of the drift gas supply and/or of the sample gas supply for generating sample ions without formation of NO_{X} ions at the local ionization source (24) and/or for avoiding the introduction of NO_{X} ions into the drift space (10), wherein the second operating parameters set a flow rate of the sample gas supply not equal to zero and increase a flow rate of the drift gas supply so that NO_{X} compounds are discharged via the gas outlet (23);
measuring a second drift time t_{P} of the sample ions at the drift space temperature T; and
determining a normalized ion mobility of the sample K₀^{P}(T) based on the measured first drift time t_{NOX}, the measured second drift time t_{P} and a normalized ion mobility of the NO_{X} ions K₀^{R}(T) as reference according to K₀^{P}(T) = t_{NOX}/t_{P} * K₀^{R}(T).

15. The method according to claim 14, wherein the first operating parameters set a flow rate of the sample gas supply and/or a flow rate of the drift gas supply for limiting a flow velocity at the local ionization source to below 50 cm/s and/or set a supply voltage of a dielectric barrier discharge source as the local ionization source (24) above a predetermined limit voltage, and wherein the second operating parameters set a flow rate of the sample gas supply and/or a flow rate of the drift gas supply for setting a flow velocity at the local ionization source (24) of above 50 cm/s and/or set a supply voltage of a dielectric barrier discharge source as the local ionization source (24) below a predetermined limit voltage.

## Revendications

1. Spectromètre de mobilité ionique (100) destiné à déterminer la mobilité ionique d'un échantillon, comprenant :
une chambre de dérive cylindrique (10) conçue pour transporter des ions d'une grille de commutation (11) vers un détecteur d'ions (12), à contre-courant d'un écoulement axial de gaz de dérive (13),
une chambre de réaction cylindrique (20), adjacente à la chambre de dérive dans la direction axiale (1), comprenant une entrée de gaz d'échantillon (21), voisine de la grille de commutation (11), destinée à introduire un gaz d'échantillon (22), une sortie de gaz (23), située à l'opposé de la grille de commutation (11) et disposée concentriquement par rapport à la chambre de réaction et à la chambre de dérive dans la direction axiale, destinée à évacuer le gaz de dérive (13) et le gaz d'échantillon (22) sous la forme d'un flux gazeux unidirectionnel, ainsi qu'une source d'ionisation locale (24) disposée au niveau de la sortie de gaz (23),
l'entrée de gaz d'échantillon (21) comportant des entrées de gaz (25), disposées à l'opposé de celle-ci sur une circonférence intérieure de la chambre de réaction (20).

2. Spectromètre de mobilité ionique (100) selon la revendication 1, dans lequel la chambre de dérive (10) et la chambre de réaction (20) présentent une forme cylindrique circulaire, et dans lequel l'introduction du gaz d'échantillon (22) par les entrées de gaz (25) s'effectue avec des composantes d'écoulement radiales.

3. Spectromètre de mobilité ionique (100) selon la revendication 2, dans lequel les composantes radiales des vitesses d'écoulement des flux partiels du gaz d'échantillon (22) acheminés par des entrées de gaz (25) opposées se compensent mutuellement.

4. Spectromètre de mobilité ionique (100) selon l'une quelconque des revendications précédentes, dans lequel l'entrée de gaz d'échantillon (21) comprend une couronne d'admission (26) s'étendant sur tout le pourtour de la chambre de réaction (20) et comportant au moins un canal d'écoulement (28) reliant une conduite d'alimentation en gaz d'échantillon (27) à au moins une entrée de gaz (25).

5. Spectromètre de mobilité ionique (100) selon la revendication 4, dans lequel l'entrée de gaz d'échantillon (21) comporte des paires d'entrées de gaz (25) opposées, disposées sur la circonférence intérieure de la chambre de réaction (20), chaque paire d'entrées de gaz (25) comprenant une première entrée de gaz (251) et une deuxième entrée de gaz (252), la conduite d'alimentation en gaz d'échantillon (27) étant reliée à au moins une première entrée de gaz (251) par un premier canal d'écoulement (281) et à au moins une deuxième entrée de gaz (252) par un deuxième canal d'écoulement (282).

6. Spectromètre de mobilité ionique (100) selon la revendication 4 ou 5, dans lequel au moins un canal d'écoulement (28) comporte des obstacles à l'écoulement (29) destinés à dévier un flux de gaz d'échantillon (22) vers les entrées de gaz (25).

7. Spectromètre de mobilité ionique (100) selon l'une quelconque des revendications 4 à 6, dans lequel au moins un canal d'écoulement (281, 282) comporte une pluralité d'entrées de gaz (251, 252).

8. Spectromètre de mobilité ionique (100) selon la revendication 7, dans lequel un obstacle à l'écoulement (29) destiné à dévier un flux de gaz d'échantillon (22) est disposé entre deux entrées de gaz (25).

9. Spectromètre de mobilité ionique (100) selon la revendication 8, dans lequel les obstacles à l'écoulement (29) sont conçus pour uniformiser les flux partiels de gaz d'échantillon sortant des entrées de gaz (25).

10. Spectromètre de mobilité ionique (100) selon l'une quelconque des revendications précédentes, dans lequel la sortie de gaz (23) présente une section d'écoulement inférieure à celle de la chambre de réaction (20) et/ou de la chambre de dérive (10).

11. Spectromètre de mobilité ionique (100) selon l'une quelconque des revendications précédentes, dans lequel la source d'ionisation locale (24) est configurée pour produire une décharge à barrière diélectrique et/ou comprend une source de rayonnement (40) destinée à irradier la source d'ionisation locale (24) avec une lumière d'une longueur d'onde comprise entre 280 nm et 480 nm.

12. Spectromètre de mobilité ionique (100) selon l'une quelconque des revendications précédentes, comprenant en outre au moins une source de potentiel (30), disposée dans la chambre de réaction (20), destinée à générer un champ électrique pour transporter les ions formés au niveau de la source d'ionisation locale (24) en direction de la chambre de dérive (10).

13. Spectromètre de mobilité ionique (100) selon l'une quelconque des revendications précédentes, comprenant en outre une entrée de gaz de dérive (13), disposée au niveau du détecteur d'ions (12), une alimentation en gaz de dérive destinée à fournir le gaz de dérive de manière commandée ou régulée, ainsi qu'une alimentation en gaz d'échantillon destinée à fournir le gaz d'échantillon de manière commandée ou régulée.

14. Procédé de fonctionnement d'un spectromètre de mobilité ionique (100) selon la revendication 1 destiné à déterminer la mobilité ionique d'un échantillon, comprenant les étapes consistant à :
régler les premiers paramètres de fonctionnement d'une source d'ionisation locale (24), d'une alimentation en gaz de dérive destinée à fournir de l'air comme gaz de dérive et/ou d'une alimentation en gaz d'échantillon du spectromètre de mobilité ionique afin de générer des ions NO_{X} au niveau de la source d'ionisation locale (24) et d'introduire les ions NO_{X} générés dans une chambre de dérive (10) du spectromètre de mobilité ionique (100) ;
mesurer un premier temps de dérive t_{NOX} des ions NO_{X} à la température T de la chambre de dérive ;
régler de seconds paramètres de fonctionnement de la source d'ionisation locale (100), de l'alimentation en gaz de dérive et/ou de l'alimentation en gaz d'échantillon afin de générer des ions d'échantillon sans formation d'ions NO_{X} au niveau de la source d'ionisation locale (24) et/ou d'empêcher l'introduction d'ions NO_{X} dans la chambre de dérive (10), les seconds paramètres de fonctionnement réglant un débit de l'alimentation en gaz d'échantillon différent de zéro et augmentant le débit de l'alimentation en gaz de dérive de manière à évacuer les composés NO_{X} par la sortie de gaz (23) ;
mesurer un second temps de dérive t_{P} des ions d'échantillon à la température T de la chambre de dérive ;
déterminer une mobilité ionique normalisée de l'échantillon K₀^{P}(T) à partir du premier temps de dérive mesuré t_{NOX}, du second temps de dérive mesuré t_{P} et d'une mobilité ionique normalisée K₀^{R}(T) des ions NO_{X} utilisée comme référence selon la relation K₀^{P}(T)=t_{NOX}/t_{P}* K₀^{R}(T).

15. Procédé selon la revendication 14, dans lequel les premiers paramètres de fonctionnement règlent un débit de l'alimentation en gaz d'échantillon et/ou un débit de l'alimentation en gaz de dérive de manière à limiter une vitesse d'écoulement au niveau de la source d'ionisation locale à moins de 50 cm/s, et/ou règlent une tension d'alimentation d'une source de décharge à barrière diélectrique constituant la source d'ionisation locale (24) au-dessus d'une valeur limite prédéterminée, et dans lequel les seconds paramètres de fonctionnement règlent un débit de l'alimentation en gaz d'échantillon et/ou un débit de l'alimentation en gaz de dérive de manière à obtenir une vitesse d'écoulement au niveau de la source d'ionisation locale (24) supérieure à 50 cm/s, et/ou règlent la tension d'alimentation de la source de décharge à barrière diélectrique constituant la source d'ionisation locale (24) en dessous d'une tension limite prédéterminée.
